(19) Europäisches Patentamt
European Patent Office
Office européen des brevets

(11) EP 2 235 099 B1

(12) EUROPÄISCHE PATENTSCHRIFT

(45) Veröffentlichungstag und Bekanntmachung des Hinweises auf die Patenterteilung:
**22.05.2013 Patentblatt 2013/21**

(21) Anmeldenummer: **09704672.6**

(22) Anmeldetag: **21.01.2009**

(51) Int Cl.:
***C08K 3/22*** (2006.01) ***C08K 5/00*** (2006.01)
***C08K 5/16*** (2006.01)

(86) Internationale Anmeldenummer:
**PCT/EP2009/050648**

(87) Internationale Veröffentlichungsnummer:
**WO 2009/092728 (30.07.2009 Gazette 2009/31)**

(54) **STABILISATORZUSAMMENSETZUNG FÜR HALOGENHALTIGE POLYMERE**

STABILIZER COMPOSITION FOR HALOGENATED POLYMERS

COMPOSITION STABILISANTE POUR POLYMÈRES HALOGÉNÉS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **21.01.2008 DE 102008005339**

(43) Veröffentlichungstag der Anmeldung:
**06.10.2010 Patentblatt 2010/40**

(73) Patentinhaber: **Chemson Polymer-Additive AG**
**9601 Arnoldstein (AT)**

(72) Erfinder:
- **PELZL, Bernhard**
  **A-8047 Graz (AT)**
- **SCHILLER, Michael**
  **A-9601 Arnoldstein (AT)**
- **DAMM, Cornelia**
  **06126 Halle/Saale (DE)**

(74) Vertreter: **Viering, Jentschura & Partner**
**Kennedydamm 55 / Roßstrasse**
**40476 Düsseldorf (DE)**

(56) Entgegenhaltungen:
**WO-A-02/072684 GB-A- 1 244 685**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 235 099 B1

## Beschreibung

Die vorliegende Erfindung betrifft eine Stabilisatorzusammensetzung für halogenhaltige Polymere, deren Verwendung bei der Stabilisierung von halogenhaltigen Polymeren, insbesondere gegenüber unerwünschter Rosafärbung, sowie Formkörper, die diese Stabilisatorzusammensetzung enthalten.

Halogenhaltige Polymere bzw. Kunststoffe oder daraus hergestellte Formkörper neigen zu substantiellen Veränderungen während ihres Herstellungsverfahrens und aufgrund der Einwirkung von Umwelteinflüssen. Zum Beispiel kann sich diese Art von Kunststoffen unter Einfluss von Wärme und/oder Licht zersetzen oder verfärben. Zur Stabilisierung von halogenhaltigen Polymeren sind daher bereits verschiedenste Stoffe oder Stoffgemische verwendet worden.

Ein halogenhaltiges Polymer, wie z.B. Polyvinylchlorid (PVC), geht beim Schmelzverformen in eine Polyenstruktur über, wobei Salzsäure eliminiert und das Polymer verfärbt wird. Um die Thermostabilität des Polymers zu verbessern, ist es üblich, Metallcarboxylate als Stabilisatoren in das Harz einzuarbeiten. Da jedoch die Einarbeitung der Stabilisatoren allein bei einem längeren Schmelzformverfahren zu einer Schwärzung des Polymeren hervorruft, ist es allgemeine Praxis, einen Co-Stabilisator zuzusetzen. Es ist eine Vielzahl von Kombinationen aus anorganischen und organischen Verbindungen als Stabilisatoren für halogenhaltige Polymere bekannt. In den letzten Jahren sind jedoch verstärkt stickstoffhaltige Verbindungen als Stabilisatoren in den Markt gekommen.

Stickstoffhaltige Stabilisatoren-Verbindungen sind ebenfalls in der Patentliteratur beschrieben worden.

Zum Beispiel beschreibt DE 1 694 873 die Verwendung von Uracilen, die sowohl gegen Wärme als auch gegen Licht stabilisieren können.

EP 768 336 beschreibt eine Stabilisatorkombination, die neben mehreren Bestandteilen vor allem ein Pyrimidinon enthält.

EP 736 569 beschreibt die Verwendung spezifischer Stickstoffverbindungen, die sich durch eine sehr gute stabilisierende Wirkung in halogenhaltigen Polymerisaten sowohl gegen oxidativen, thermischen als auch lichtinduzierten Abbau auszeichnen. Besonders bemerkenswert ist die farbstabilisierende Wirkung bei thermischer Belastung.

In WO 02/072684 wurde herausgefunden, dass sich Systeme aus mindestens einer oder mehreren Verbindungen aus den Gruppen der Enamine, Indole und Harnstoffe und mindestens einem Perchlorat-Salz besonders gut zur Stabilisierung von chlorhaltigen Polymeren, insbesondere PVC, eignen. Unter anderem sind hier auch Aminocrotonate genannt (siehe Formel 4).

DE 1 030 1675 wiederum beschreibt, dass sich Mischungen, aus mindestens einem Alkanolamin und mindestens einem Uracil gut zur Stabilisierung von chlorhaltigen Polymeren, insbesondere PVC, eignen.

In DE 1954273 wird die Kombination von Titandioxid mit einem Melamin als lichtstabilisierendes Pigment beschrieben, während DE 10 2004 037 369 ein Stabilisatorsystem beschreibt, das ein lineares oder cyclisches Azylureid und/oder ein Polyaminokrotonester und einen Polyepoxypropylalkoholether und/oder ein Zyanamidderivat enthält sowie als Pigment ein geringe Menge $TiO_2$.

Es hat sich jedoch gezeigt, das es bei solchen mit Stickstoffverbindungen stabilisierten Polymeren, die zum Teil nur geringe Mengen an Titaniumdioxid enthalten, im Sonnen- und auch bei künstlichem Licht zu einer Rosaverfärbung des Polymers kommt. Diese Rosaverfärbung hat bislang den Einsatz stickstoffhaltiger Verbindungen in Fensterprofilen verhindert. Die farbgebende Komponente dieser Rosaverfärbung lässt sich weder analysieren noch in geeigneter Menge simulativ herstellen, da die Veränderung der Farbe aus dem Abbau des halogenhaltigen Polymers nach komplexen und unbekannten Mechanismen resultiert, die nicht nur von der Art und Intensität der abbauenden Quellen abhängen, sondern auch von der Art und den Mengen jeder in der Polymerzusammensetzung enthaltenen Substanz, insbesondere zum Beispiel von den stickstoffhaltige Verbindungen oder $TiO_2$.

Der vorliegenden Erfindung liegt die Aufgabe zugrunde, neue Stabilisatorzusammensetzungen bereitzustellen, die sich insbesondere für halogenhaltige Polymere eignen, ohne die oben erwähnten Nachteile der bekannten Stabilisatoren aufzuweisen. In diesem Zusammenhang liegt der Erfindung auch die Aufgabe zugrunde, ein universelles Titandioxid bereitzustellen, welches in Kombination mit stickstoffhaltigen Stabilisatorverbindungen nicht zu einer Rosafärbung im Kunst- und Sonnenlicht führt.

Diese Aufgabe wird erfindungsgemäß gelöst durch die Bereitstellung einer Stabilisatorzusammensetzung für halogenhaltige Polymere enthaltend Titandioxid und mindestens eine stickstoffhaltige Verbindung, wobei das Titandioxid eine Photo-Elektromotorische Kraft im $\mu$s-Bereich > -15mV und eine Photo-Elektromotorische Kraft im ms-Bereich > +5mV hat.

Überraschenderweise hat sich gezeigt, dass die erfindungsgemäßen Stabilisatorzusammensetzungen halogenhaltige Polymeren und den daraus hergestellten Teilen und Produkten eine erhöhte Stabilität gegenüber der Einwirkung von Sonnen- und Kunstlicht verleihen. Insbesondere kann eine Rosaverfärbung des halogenhaltigen Materials verhindert werden, wenn es in Applikationen, die im freien verwendet werden, zum Beispiel in Fensterprofilen, eingesetzt wird.

Gegenstand der vorliegenden Erfindung ist ebenfalls die Verwendung der erfindungsgemäßen Stabilisatorzusammensetzung zur Stabilisierung von halogenhaltigen Polymeren, sowie Formkörper aus diesen halogenhaltigen Polymeren, die eine Stabilisatorzusammensetzung gemäß der Erfindung enthalten.

Kurze Beschreibung der Zeichnungen:

Fig. 1 veranschaulicht eine Anordnung zur Messung der Photo-EMK
Fig. 2 veranschaulicht ein Diagramm zur Bestimmung und Archivierung einer Farbe
Fig. 3 veranschaulicht ein Photo-EMK-Signal einer Dispersionsschicht der $TiO_2$-Charge Kronos 1001 mit PVB als Bindemittel; ca. $2.7*10^{13}$ Quanten pro Blitz; Totalabsorption; Blitzabstand 120 s.
Fig. 4 veranschaulicht ein Photo-EMK-Signal einer Dispersionsschicht der $TiO_2$-Charge Kronos 1014 mit PVB als Bindemittel; ca. $2.7*10^{13}$ Quanten pro Blitz; Totalabsorption; Blitzabstand 120 s.
Fig. 5 veranschaulicht ein Photo-EMK-Signal einer Dispersionsschicht der $TiO_2$-Charge Kronos 1071 mit PVB als Bindemittel; ca. $2.7*10^{13}$ Quanten pro Blitz; Totalabsorption; Blitzabstand 120 s.
Fig. 6 veranschaulicht ein Photo-EMK-Signal einer Dispersionsschicht der $TiO_2$-Charge Kronos 1080 mit PVB als Bindemittel; ca. $2.7*10^{13}$ Quanten pro Blitz; Totalabsorption; Blitzabstand 120 s.
Fig. 7 veranschaulicht ein Photo-EMK-Signal einer Dispersionsschicht der $TiO_2$-Charge hergestellt nach dem Chloridverfahren 2 mit PVB als Bindemittel; ca. $2.7*10^{13}$ Quanten pro Blitz; Totalabsorption; Blitzabstand 120 s.
Fig. 8 veranschaulicht ein Photo-EMK-Signal einer Dispersionsschicht der $TiO_2$-Charge hergestellt nach dem Chloridverfahren 1 mit PVB als Bindemittel; ca. $2.7*10^{13}$ Quanten pro Blitz; Totalabsorption; Blitzabstand 120 s.
Fig. 9 veranschaulicht die $\Delta$a-Werte aus Beispiel 9 (nach 120 h im Bandol Wheel berechnet aus den Predictions in echip bei L = 95.3, a 0 -0.3, b = 5.8) gegen die Umax-Werte ("Umax Tab. 9a" = Umax im ms-Bereich, 1 Blitz, "Umax Tab. 9b" = Umax im $\mu$s-Bereich, 1 Blitz) - Trendlinie linear

Die vorliegende Erfindung wird nachstehend näher beschrieben.

Die Stabilisatorzusammensetzung der vorliegenden Erfindung kann für halogenhaltige Polymere verwendet werden. Beispiele für solche halogenhaltige thermoplastische Polymere sind Polyvinylchlorid (PVC), Polyvinylidenchlorid, chloriertes oder chlorsulfoniertes Polyethylen, chloriertes Polypropylen oder chloriertes Ethylen/Vinylacetat-Copolymer oder ähnliche Verbindungen. Besonders vorteilhaft sind Polymere vom PVC-Typ, d.h. Vinylchlorid-Homopolymere und Copolymere von Vinylchlorid mit anderen Monomeren.

Eine der Komponenten der erfindungsgemäßen Stabilisatorzusammensetzung ist Titandioxid. Titandioxid tritt im Wesentlichen in der Natur in drei Modifikationen auf: Anatas, Brookit und Rutil.

Sowohl als Anatas als auch als Rutil besitzt Titandioxid technische Bedeutung als Pigment. Die hohen Brechungsindices von 2.55 (Anatas) und 2.75 (Rutil) begründen das Aufhell- und Deckvermögen und somit den Einsatz als Weißpigment. Rutil absorbiert bei entsprechender Dosierung alles Licht unter 400 nm, also den gesamten UV-Bereich. Die Absorption des Anatas ist etwas zu kürzeren Wellenlängen verschoben. Brookit wiederum zeigt keinerlei photokatalytische Aktivität.

Das in der Erfindung eingesetzte Titandioxid ist Titandioxid, das eine ganz bestimmte Charakteristik zeigt. So hat das $TiO_2$ eine Photo-Elektromotorische Kraft im $\mu$s-Bereich > -15mV und eine Photo-Elektromotorische Kraft im ms-Bereich > +5mV. In einer Ausführungsform der vorliegenden Erfindung hat das Titandioxid eine Photo-. Elektromotorische Kraft im us-Bereich > -10mV und eine Photo-Elektromotorische Kraft im ms-Bereich > +10mV.

Unter einer Photo-Elektromotorischen Kraft (Photo-EMK) versteht man den Effekt, der auftritt, wenn Elektronen aus dem Valenzband einer Verbindung durch Einwirkung von Licht und/oder Wärme in das nächst höhere Band, das sogenannte Leitungsband, übergehen, wobei dabei ein Photohalbleiter entsteht. Durch diesen Übergang hinterlässt das Elektron ein "Loch", in das ein benachbartes Elektron springen kann. Zudem können Elektronen wieder aus dem Leitungsband zurück in das "Loch" im Valenzband springen. Dieser Ladungsübergang des Photohalbleiters lässt sich in Form der Photo-EMK charakterisieren. Die Photo-EMK hängt auch von der Wellenlänge des Anregungsblitzes ab. Eine Photo-EMK wird nur beobachtet, wenn die Probe das Anregungslicht absorbiert. $TiO_2$ absorbiert beispielsweise nur im UV-Bereich.

Zur Messung dieser Photo-EMK werden die zu untersuchenden Verbindungen in eine polymere Matrix eingebracht wie zum Beispiel in M. Schiller et al., Journal of Photochemistry and Photobiology A: Chemistry 149 (2002) 227-236 beschrieben Beispielsweise wird eine bestimmte Menge der Testsubstanz, zum Beispiel 100 mg, in einer vorgegebenen Menge, zum Beispiel, 3 g einer 10%igen Lösung von Polyvinylbutyral (PVB) in 1,2-Dichlorethan dispergiert, beispielsweise unter Zuhilfenahme von Ultraschall. Diese Mischung wird auf einer Glasplatte mit einer genau definierten Fläche vergossen. Die Fläche kann zum Beispiel ca. $\geq 27\ cm^2$, beispielsweise ca. $\geq 47\ cm^2$ sein. Die aufgetragene Schicht sollte so dünn wie möglich sein. Unter den oben genannten Verhältnissen ergibt sich zum Beispiel auf Grund der Masse des PVBs die optimale Schichtdicke. Wird mehr Substanz eingewogen, muß die Ausgießfläche entsprechend größer gewählt werden. Die Trocknung der Schichten erfolgt in einer Lösungsmittelatmosphäre. Die getrockneten Dispersionsschichten werden von der Glasplatte entfernt und die Lösungsmittelreste werden bei Raumtemperatur im Vakuum entfernt. Die Dispersionsschichten haben eine Totalabsorption im UV-Bereich und eine Schichtdicke von zum Beispiel ungefähr 60 bis ungefähr 80 $\mu$m. Die Proben wurden bei 100% rel. Luftfeuchte (im Exsikkator über

Wasser) gelagert.

Bei Messungen der Photo-EMK befindet sich die Probe elektrisch isoliert zwischen einer transparenten Front- und einer Rückelektrode (Figur 1). Ein hochohmiges Spannungsmessgerät ist mit beiden Elektroden verbunden. Belichtet man die Probe durch die Frontelektrode mit einem kurzen Lichtblitz, so lassen sich an dem Messgerät eine Spannung und deren Abklingprozess nachweisen, indem die sich in der Probe aufbauende Spannung an den Elektroden stromlos abgegriffen wird und zum Beispiel an einem Oszillographen aufgezeichnet wird. Die Isolation zwischen Probe und Elektroden ist wesentlich, da Abklingprozesse in der Probe untersucht werden sollen und somit Elektronenübergänge zwischen Probe und Elektrode vermieden werden müssen.

Beispielsweise besteht die transparente Frontelektrode aus Quarzglas, das mit ITO bedampft ist, da dieses Material lichtdurchlässig ist und entsprechende elektrische Eigenschaften aufweist. Die Rückelektrode kann beispielsweise aus Messing bestehen, wobei weitere dem Durchschnittsfachmann bekannte Materialien verwendet werden können.

Als Lichtquelle kann aus einem Laser bestehen, beispielsweise kann ein 100 kW Stickstofflaser verwendet werden. Die Wellenlänge des Anregungsblitzes ist abhängig vom verwendeten Laser. Beispielsweise kann die Wellenlänge des Anregungsblitzes 337 nm betragen. Die Pulsdauer ist im Bereich von 0.2 bis 0.5 ns, beispielsweise ist die Pulsdauer 0.3 ns. Von Vorteil ist, dass die maximale Photo-EMK nicht nennenswert von der Intensität des Anregungsblitzes abhängt.

Mittels der oben erläuterten Anordnung werden Photo-EMK-Signale in zwei unterschiedlichen Zeitskalen registriert:

a) Kurzzeitbereich: Signal bis 2.5 $\mu$s nach dem Blitz zur Registrierung der schnell abklingenden Prozesse
b) ms-Bereich: Signal bis 100 ms nach dem Blitz zur Registrierung der langsam abklingenden Prozesse

In allen oben genannten Fällen wird zunächst das Signal des ersten Blitzes registriert. Danach kann eine Akquisitionsmessung durchgeführt werden. Hierbei wird die Probe mehrmals in bestimmten zeitabständen, beispielsweise in einem Abstand von 120 s, belichtet, wobei der Oszillograph die Signale mittelt. Die Akquisitionsmessung wird durchgeführt, um mögliche Aufladungseffekte der Proben zu untersuchen. Damit wird das Signal/Rausch-Verhältnis verbessert, was die Genauigkeit einer kinetischen Analyse der Signale erhöht. Nach der Akquisitionsmessung wird ein neues Probenstück eingelegt.

Die Messungen werden normalerweise unter Normaldruck und bei einer Temperatur von 25°C durchgeführt. Es sind allerdings auch andere Messbedingungen möglich.

Aus den experimentellen Kurven wurde der Maximalwert $U_{max}$ der Photo-EMK bestimmt. $U_{max}$ ist ein relatives Maß für die Effizienz der Ladungstrennung bei Belichtung. Der Abklingprozess der Photo-EMK wurde nach einem biexponentiellen Zeitgesetz (Gl. (1)) ausgewertet.

$$U(t) = U_1^0 \exp(-k_1 t) + U_2^0 \exp(-k_2 t) \qquad (1)$$

Dabei repräsentieren $U_1^0$ bzw. $U_2^0$ Ladungsträgermengen zu Beginn des Abklingprozesses in Oberflächennähe ($U_1^0$) bzw. im Volumen ($U_2^0$). Die Abklingkonstanten $k_1$ und $k_2$ sind ein relatives Maß für die Geschwindigkeit der Rekombination in Oberflächennähe ($k_1$) und im Volumen ($k_2$).

Die Photo-EMK-Signale einer Dispersionsschicht einiger getesteter $TiO_2$-Chargen sind in den Figuren 3 bis 8 zu sehen. Dabei wurde PVB als Bindemittel und ein Laser mit $2.7 \cdot 10^{13}$ Quanten pro Blitz verwendet. Der Blitzabstand war 120 s, die aufgenommene Zeit lag zwischen 0-2.5 $\mu$s bzw. 0-200 ms. Die genaue Versuchsdurchführung ist im experimentellen Teil beschrieben.

Überraschenderweise hat sich nun gezeigt, dass durch den Zusatz von so definiertem Titandioxid zu halogenhaltigen Polymeren, die Stickstoffstabilisatoren enthalten, die Rosafärbung des polymeren Materials unter Einwirkung von Kunst- oder Sonnenlicht vermieden oder zumindest stark vermindert werden kann. Dieser stabilisierende Effekt tritt auch auf, wenn das halogenhaltige Polymer weitere Stabilisatoren, Co-Stabilisatoren oder Hilfsmittel enthält.

Man nimmt an, ohne auf eine bestimmte Theorie beschränkt zu sein, dass das Titandioxid Einfluss auf bei der Verwendung von Stabilisatorzusammensetzungen entstehende Charge-Transfer-Komplexe nimmt. So ist bekannt, dass Stickstoffverbindungen in Stabilisatorzusammensetzungen als Elektronendonoren fungieren. Beispielhaft sei hier 1,3-Dimethyl-4-aminouracil (DMAU) genannt, das instabile Cl-Atome in einer PVC-Kette in einer nucleophilen Substitution ersetzen kann. Diese Stcikstoffverbindungen können auch als Elektronendonoren in Charge Transfer (CT)-Komplexen wirken.

Titandioxid kann als Elektronenacceptor angesehen werden. Wenn Licht darauf fällt, wird ein Elektron aus dem Valenzband ins Leitungsband angehoben. Im Valenzband verbleibt ein positiv geladenes Loch, das als Elektronenacceptor wirken kann. Dadurch kann zum Beispiel ein CT-Komplex zwischen Titandioxiden und DMAU gebildet werden. Dies macht sich dadurch bemerkbar, dass sich Kombinationen aus PVC mit einer Stabilisatorzusammensetzung aus Titandioxid und zum Beispiel DMAU nach einer gewissen Zeit im Kunst- oder natürlichen Licht rosa verfärben. Um diese Rosaverfärbung zu verhindern oder abzuschwächen, muss daher versucht werden, die Bildung der für die Rosaverfärbung verantwortlichen CT-Komplexe zu vermeiden. Darauf beruht das Prinzip der vorliegenden Erfindung, d.h. das durch Verwendung bestimmter Titandioxide besagte Rosaverfärbung ausgeschaltet, wird.

Das erfindungsgemäß verwendete Titandioxid kann einzeln zum Polymer oder zur Polymermischung hinzugegeben werden. Es ist aber auch möglich, das Titandioxid zusammen mit der Stickstoffverbindung oder anderen (Co)-Stabilisatoren oder den unten aufgeführten Hilfsstoffen zum dem Polymer oder einem Polymergemisch hinzuzugeben. Zum Beispiel ist eine Dosierung im Extruder, z.B. in der Vakuumzone, ebenfalls von der vorliegenden Erfindung umfasst.

Für Außenanwendungen hat das erfindungsgemäße Titaniumdioxid vorteilhafterweise Rutil-Struktur. Für alle anderen Anwendungen kann es sowohl Anatas- als auch Rutilstruktur haben. Das erfindungsgemäß eingesetzte Titaniumdioxid kann ebenfalls mit einer Beschichtung versehen werden. Die Beschichtung kann aus anorganischen oder aus organischen Materialien bestehen. Beispielsweise können anorganische Beschichtungen auf Aluminium-, Silizium- und/oder Zirkoniumoxiden basieren. Organische Beschichtungen wiederum sind zum Beispiel Polydi-/Monoalkylsiloxane oder Stearinsäure und deren Derivate. Die Dicke der Beschichtung ist für die erfindungsgemäße Verwendung des Titandioxids nicht von Bedeutung.

Das Titandioxid kann erfindungsgemäß in einer Menge von ungefähr 0.01 bis ungefähr 20 Teilen pro 100 Teile (phr = "per hundred resin") Harz (Polymer) in der Stabilisatorzusammensetzung verwendet werden. In einer anderen Ausführungsform kann das Titandioxid in einer Menge von ungefähr 0.05 bis ungefähr 10.0 phr oder von ungefähr 0.1 bis ungefähr 5 phr verwendet werden, zum Beispiel in einer Menge von ungefähr 2 phr. Das Titandioxid sollte in fein verteilt und gut dispergierbar vorliegen. In einer Ausführungsform der vorliegenden Erfindung ist die Teilchengröße < 5 μm, beispielsweise < 2 μm. In einer weiteren Ausführungsform ist die Teilchengröße < 1 μm. Entscheidend ist, dass die Teilchengrüße so gewählt wird, dass die stabilisierende Wirkung der Zusammensetzung der vorliegenden Erfindung eintritt.

Die stickstoffhaltigen Verbindungen der Stabilisatorzusammensetzung der vorliegenden Erfindung sind solche Stickstoffverbindungen, die gegenwärtig als Stabilisatorverbindungen für halogenhaltige Polymere verwendet werden. Zum Beispiel können sie aus der Gruppe, die aus einer heterocyclischen Verbindung und einem Amin besteht, ausgewählt werden. Beispiele für heterocyclische Stickstoffverbindungen beinhalten, sind aber nicht darauf beschränkt, substituierte oder unsubstituiertes Uracil, Pyrimidon, Indol, (Thio)Harnstoff, Aminocrotonsäureester oder ähnliche.

Das Uracil kann die folgende Formel I

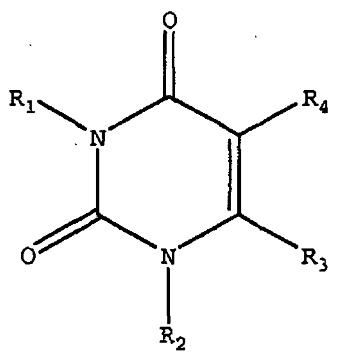

(I)

haben, wobei

$R_1$, $R_2$, $R_3$ und $R_4$ unabhängig voneinander H, $C_1$-$C_{18}$ Alkyl, $C_2$-$C_6$ Alkenyl, $C_1$-$C_4$ Alkoxy, $C_5$-$C_8$ Cycloalkyl, $C_5$-$C_{10}$ Aryl, wobei $R_3$ und $R_4$ unabhängig voneinander $NHR_5$ sein können, wobei $R_5$ unabhängig zu $R_1$ oder $R_2$ H, $C_1$-$C_{18}$ Alkyl, $C_2$-$C_6$ Alkenyl, $C_1$-$C_4$ Alkoxy, $C_5$-$C_8$ Cycloalkyl, $C_5$-$C_{10}$ Aryl ist.

Der Begriff "Alkyl" betrifft vollständig gesättigte aliphatische, lineare oder verzweigte Kohlenwasserstoffe. In bestimmten Ausführungsformen umfasst ein Alkyl 1 bis 18 Kohlenstoffatome. Ein numerischer Bereich von zum Beispiel 1 bis 18 bedeutet, wann immer er auftritt, dass, zum Beispiel, $C_1$-$C_{18}$ Alkyl eine Alkylgruppe betrifft, die 1 Kohlenstoffatom, 2 Kohlenstoffatome, 3 Kohlenstoffatome usw. bis zu einschließlich 20 Kohlenstoffatomen umfasst. Die Alkylgruppe kann optional substituiert sein. Beispiele von Alkyl-Verbindungen beinhalten, sind aber nicht darauf beschränkt, Methyl, Ethyl, n-Propyl, Isopropyl, n-Butyl, Isobutyl, sek.-Butyl, tert.-Butyl, Pentyl, Hexyl, Heptyl, Octyl und ähnliche.

Der Begriff "Alkenyl" betrifft aliphatische Kohlenwasserstoffe mit einer oder mehreren Doppelbindungen. In bestimmten Ausführungsformen umfasst ein Alkenyl 2 bis 6 Kohlenstoffatome. Die Alkenylgruppe kann optional substituiert sein. Beispiele von Alkenyl-Verbindungen beinhalten, sind aber nicht darauf beschränkt, Ethenyl, Propenyl, 1,4-Butadienyl und ähnliche.

Der Begriff "Alkoxy" betrifft aliphatische Kohlenwasserstoffe mit einer -O-Alkyl-Einheit. In bestimmten Ausführungsformen umfasst ein Alkoxy 1 bis 4 Kohlenstoffatome. Die Alkoxygruppe kann optional substituiert sein. Beispiele von Alkoxy-verbindungen beinhalten, sind aber nicht darauf beschränkt, Methoxy, Ethoxy, Propoxy, tert.-Butoxy und ähnliche.

Der Begriff "Cycloalkyl" betrifft cyclische gesättigte Kohlenwasserstoffe. In bestimmten Ausführungsformen umfasst ein Cycloalkyl 5 bis 8 Kohlenstoffatome. Die Cycloalkylgruppe kann optional substituiert sein. Beispiele von Cycloalkyl-Verbindungen beinhalten, sind aber nicht darauf beschränkt, Cyclopentan, Cyclohexan, Cycloheptan, Cyclooktan und ähnliche.

Der Begriff "Aryl" betrifft einen aromatischen Ring, bei dem jedes Ringatom Kohlenstoff ist. Arylringe können aus fünf, sechs, sieben, acht, neun oder mehr Kohlenstoffatomen aufgebaut sein. Zum Beispiel können Arylverbindungen bis zu 15 Kohlenstoffatome besitzen. Die Arylgruppe kann optional substituiert sein. Beispiele von Arylverbindungen beinhalten, sind aber nicht darauf beschränkt, Cyclopentadienyl, Phenyl, und ähnliche.

Der Begriff "optional substituiert" betrifft eine Gruppe, bei der ein oder mehr Wasserstoffatome durch einen Substituenten ersetzt wurden. Der Substituent kann Alkyl, Alkoxy, Cycloalkyl, Aryl, Heteroaryl, OH, CN, Halogen, $NO_2$ oder ein Amin sein, ist aber nicht darauf beschränkt.

In einer Ausführungsform ist das Uracil 1,3-Dimethyl-4-aminouracil.

Weitere Stickstoffverbindungen gemäß Formel II können verwendet werden,

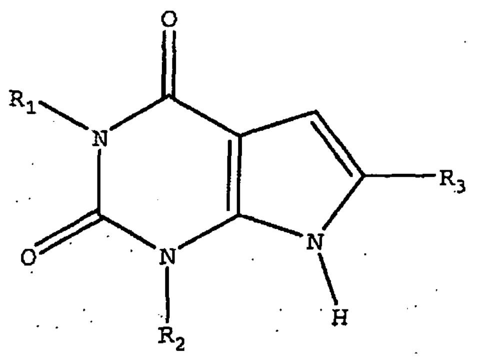

(II)

wobei $R_1$, $R_2$ und $R_3$ wie oben angegeben sein können.

Weitere Beispiele für die oben genannten Stickstoffverbindungen sind Aminocrotonsäureester der allgemeinen Formel III

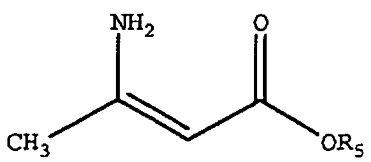

(III)

wobei $R_5$ H, $C_1$-$C_{18}$ Alkyl, $C_2$-$C_6$ Alkenyl, $C_1$-$C_4$ Alkoxy, $C_5$-$C_8$ Cycloalkyl, oder $C_5$-$C_{10}$ Aryl sein kann, oder wobei $R_5$ so gewählt wird, das ein symmetrischer Aminocrotonsäureester entsteht. Symmetrisch in diesem Zusammenhang bedeutet, dass das Molekül an einem Punkt gespalten werden kann, um zwei gleichartige Moleküle zu erhalten.

Beispiele für Aminocrotonsäureester sind zum Beispiel

Butylenglycolaminocrotonat (= BGAC)

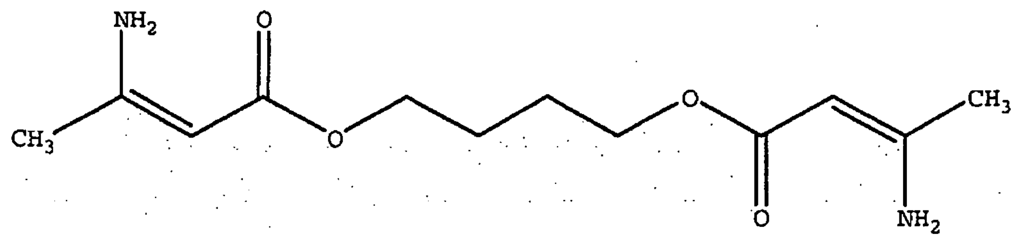

und Thioethylenglycolaminocrotonat (=TGAC)

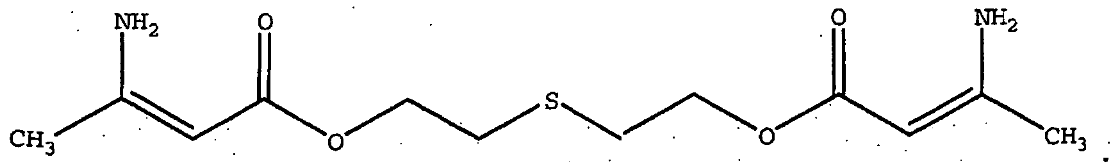

Beispiel für Verbindungen aus der Gruppe der Harnstoffe sind Harnstoff und Tetramethylharnstoff.

Die Stickstoffverbindungen können in einer Menge von ungefähr 0.01 phr bis ungefähr 1 phr oder ungefähr 0.05 phr bis ungefähr 0.8 phr eingesetzt werden. In einer Ausführungsform können die Stickstoffverbindungen in einer Menge von ungefähr 0.1 bis ungefähr 0.5 phr verwendet werden.

Die erfindungsgemäßen Titaniumdioxide können weiterhin mit einem oder mehreren Additiven, wie zum Beispiel Primärstabilisatoren, Co-Stabilisatoren, Zeolithe, Antioxidantien, Füllstoffe, Weichmacher, Farbstoffe, Pigmente, Antistatikmittel, oberflächenaktive Agenzien, Schaumbildner, Schlagzähmodifizierer, UV-Stabilisatoren, Gleitmittel, Verarbeitungsmittel oder dergleichen, kombiniert werden.

Co-Stabilisatoren sind Verbindungen die einen weiteren stabilisierenden Beitrag für halogenhaltige Polymere liefern, wenn in der Stabilisatorzusammensetzung gemäß der vorliegenden Erfindung verwendet. Mögliche Co-Stabilisatoren können aus der Gruppe, die aus 1,3-Diketonverbindungen, Polyolen, Metallsalzen, natürlichen oder synthetischen Mineralien wie Hydrotalcite, Hydrocalumite und Zeolite, Aminosäurederivaten, organischen Estern der phosphorigen Säure, Epoxyverbindungen besteht, ausgewählt werden.

Beispiele für 1,3-Diketonverbindungen beinhalten, sind aber nicht darauf beschränkt, Dibenzoylmethan, Stearoylbenzoylmethan, Palmitoylbenzoylmethan, Myristoylbenzoylmethan, Lauroylbenzoylmethan, Benzoylaceton, Acetylaceton, Tribenzoylmethan, Diacetylacetobenzol, p-Methoxystearoylacetophenon, Acetoessigsäureester und Acetylaceton sowie deren Metallsalze, insbesondere die des Lithiums, Natriums, Kaliums, Calciums, Magnesiums, Zinks, Zinns, Titans, Aluminiums und/oder Eisens.

Co-Stabilisatoren aus der Gruppe der Polyole beinhalten, sind aber nicht darauf beschränkt, Glycerin, Pentaerythrit, Di- und Tripentaerythrit, Trismethylolpropan (TMP), Di-TMP, THEIC, Sorbitol, Mannitol, Malititol, Saccharide, Disacchariden (insbesondere Saccharose, 4-O-ß-D-Galactopyranosyl-D-glucose, 4-O-alpha-D-Glucopyranosyl-D-glucose, 6-O-(6-deoxy-alpha-L-Mannopyranosyl)-D-glucose, alpha-D-Glucopyranosyl-alpha-D-glucopyranosid, 6-O-alpha-D-Glucopyranosyl-D-glucose, 4-O-ß-D-Glucopyranosyl-D-glucose, 2-O-ß-D-Glucopyranosyl-D-glucose, 6-O-alpha-D-Glucopyranosyl-D-glucitol, 3-O-alpha-D-Glucopyranosyl-D-fructose, 6-O-ß-D-Glucopyranosyl-D-glucose, 4-O-ß-D-Galactopyranosyl-D-glucitol, 4-O-alpha-D-Glucopyranosyl-D-glucitol, 6-O-alpha-D-Galactopyranosyl-D-glucose, 3-O-alpha-D-Galactopyranosyl-D-myo-inositol, 4-O-ß-D-Galactopyranosyi-D-fructose, 4-O-ß-D-Galactopyranosyl-ß-D-glucopyranose, 6-O-alpha-D-Glucopyranosyl-D-fructose, 4-O-ß-D-Galactopyranosyl-alpha-D-glucopyranose, 2-O-(6-Deoxy-alpha-L-mannopyranosyl)-D-glucose, 4-0-alpha-D-Glucopyranosyl-D-fructose, 2-O-ß-D-Glucopyranosyl-alpha-D-glucopyranose, 1-O-alpha-D-Glucopyranosyl-D-mannitol, 6-O-(6-Deoxy-alpha-L-mannopyranosyl)-ß-D-glucopyranose, 2-0-β-D-Glucopyranosyl-ß-D-glucopyranose, 6-O-alpha-D-Glucopyranosyl-alpha-D-glucopyranose, 2-O-alpha-D-Glucopyranosyl-alpha-D-glucopyranose, 2-O-alpha-D-Glucopyranosyl-ß-D-glucopyranose, 1-O-alpha-D-Glucopyranosyl-D-fructose, 6-O-alpha-D-Glucopyranosyl-alpha-D-fructofuranose, 6-O-alpha-D-Glucopyranosyl-D-glucitol, 4-O-ß-D-Galactopyranosyl-D-glucitol, 4-O-alpha-D-Glucopyranosyl-D-glucitol, 1-O-alpha-D-Glucopyranosyl-D-mannitol), Trisaccharide, Polysaccharide, insbesondere Polyvinylalkohole, Stärke, Cellulose und deren Partialester.

Beispiele für Antioxidantien beinhalten, sind aber nicht darauf beschränkt, Alkylphenole, Hydroxyphenylpropionate, Hydroxybenzylverbindungen, Alkylidenbisphenole, Thiobisphenole und Aminophenole, insbesondere z.B. 2,6-Di-tert.-butyl-4-methyl-phenol, 2,6-Di-benzyl-4-methyl-phenol, Stearyl-3-(3'-5'-di-tert.-butyl-4'-hydroxyphenyl)propionat, 4,4'-Thiobis-(3-methyl-6-tert.-butylphenol), 4-Nonylphenol, 2,2'-Methylenbis(4-methyl-6-tert.-butylphenol), 2,5-Di-tert.-butyl-hydrochinon, 4,4',4"-(1-methyl-1-propanyl-3-ylidene)tris(2-(1,1-dimethylethyl)-5-methyl-phenol, deren neutrale oder basischen Lithium-, Magnesium-, Calcium-, Zink- und Aluminiumsalze, sowie Thioether, sterisch gehinderte

Amine und/oder Phosphonite sowie Mischungen davon.

Beispiele für Co-Stabilisatoren aus der Gruppe der Metallsalze beinhalten, sind aber nicht darauf beschränkt, Hydroxide, Oxide, Carbonate, basische Carbonate und Carbonsäuresalze von Lithium, Natrium, Kalium, Magnesium, Calcium, Aluminium, Titanium und ähnliche. In einer Ausführungsform der vorliegenden Erfindung können die Metallsalze Salze von höheren Carbonsäuren, zum Beispiel $C_6$-$C_{22}$ Carbonsäuren, sein, wie zum Beispiel Stearin-, Palmitin-, Myristin-, Laurin-, Öl-, Olein- und Rizinolsäure.

Beispiel für natürliche und synthetische Mineralien beinhalten, sind aber nicht darauf beschränkt, A3-, A4-, A5-Zeolithe, Zeolithe vom Mordenit, Erionit-, Faujasit X-oder Y-Typ sowie ZSM-5-Zeolithe, Hydrotalcite (vom Alcamizer 1- und 4-Typ) und/oder Gemische davon. Bevorzugte austauschbare Kationen darin können Protonen, Ammonium-, Lithium-, Natrium-, Kalium-, Magnesium-, Calcium-, Zink-, und/oder Zinn-Kationen sein.

Beispiele für Co-Stabilisatoren aus der Gruppe der Aminosäurederivate beinhalten, sind aber nicht darauf beschränkt, Glycin, Alanin, Lysin, Tryptophan, Acetylmethionin, Pyrrolidoncarbonsäure, α-Aminocrotonsäure, α-Aminoacrylsäure, α-Aminoadipinsäure und ähnliche, sowie die entsprechenden Ester davon. Die Alkoholkomponenten dieser Ester können einwertige Alkohole, wie zum Beispiel Methylalkohol, Ethylalkohol, Propylalkohol, i-Propylalkohol, Butylalkohol, α-Ethylhexanol, Oktylalkohol, i-Oktylalkohol, Laurylalkohol, Stearylalkohol und ähnliche umfassen, sowie Polyole, wie zum Beispiel Ethylenglycol, Propylenglycol, 1,3-Butandiol, 1,4-Butandiol, Glycerol, Diglycerol, Trismethylolpropan, Pentaerythritol, Dipentaerythritol, Erythrithol, Sorbitol, Mannitol und ähnliche.

Beispiele für Co-Stabilisatoren aus der Gruppe der Ester der phosphorigen Säure beinhalten, sind aber nicht darauf beschränkt, Triarylphosphite, wie zum Beispiel Triphenylphosphit, Tris(p-nonylphenyl)phosphit; Alkylarylphosphite, wie zum Beispiel Monoalkyldiphenylphosphite, z.B. Diphenylisooctylphosphit, Diphenylisodecylphosphit; und Dialkylmonophenylphosphite, wie zum Beispiel Phenyldiisooctylphosphit, Phenyldiisodecylphosphit; und Trialkylphosphite, wie Triisooctylphosphit, Tristearylphosphit und ähnliche.

Beispiele für Co-Stabilisatoren aus der Gruppe der Epoxyverbindungen beinhalten, sind aber nicht darauf beschränkt, verschiedene tierische oder pflanzliche öle, wie zum Beispiel Epoxysojaöl, Epoxyrapsöl, epoxidierte Carbonsäureester, wie zum Beispiel epoxidiertes Epoxymethyloleat, Epoxybutyloleat, epoxidierte alicyclische Verbindungen, Glycidether, wie zum Beispiel Bisphenol-A-diglycidether, Bisphenol-F-diglycidether; Glycidester, wie Glycidylacrylat, Glycidylmethacrylat, deren Polymere, Copolymere; und epoxidierte Polymere, wie epoxidiertes Polybutadien, epoxidiertes ABS, und ähnliche.

Beispielhaft sei zudem Kreide oder gecoatete Kreide als Füllstoffe benannt, wobei die Füllstoffe nicht darauf beschränkt sind.

Paraffinwachs kann beispielhaft als ein Gleitmittel verwendet werden.

Füllstoffe können in einer Menge von ungefähr 0 bis ungefähr 100 phr oder von ungefähr 1 bis ungefähr 50 phr verwendet werden. In einer Ausführungsform der vorliegenden Erfindung können Füllstoffe in einer Menge von ungefähr 2 bis ungefähr 20 phr verwendet werden. Weichmacher können in einer Menge von ungefähr 0 bis ungefähr 100 phr, zum Beispiel von ungefähr 0.05 bis ungefähr 50 phr. Gleitmittel können von ungefähr 0.05 bis ungefähr 3 phr, zum Beispiel von ungefähr 0.1 bis ungefähr 2 phr verwendet werden.

Die weiteren oben angegeben Co-Stabilisatoren können in zu den Gleitmitteln identischen Mengen verwendet werden.

Um halogenhaltige Polymere mit der erfindungsgemäßen Stabilisatorzusammensetzung zu verarbeiten, können die im Stand der Technik bekannten Verfahren verwendet werden. Beispiele für derartige Verfahren beinhalten, sind aber nicht darauf beschränkt, Kalandrieren, Extrudieren, Spritzgießen, Blasformen und ähnliche.

Aus den gemäß der Erfindung hergestellten, stabilisierten halogenhaltigen Polymeren können verschiedenste Produkte für unterschiedliche Anwendungen hergestellt werden. Beispielsweise können mit den stabilisierten Polymeren gemäß der Erfindung Fensterprofile, Rohre, Fußbodenbeläge, Dachbahnen, Kabel und Folien hergestellt werden. Zudem können die Polymere in Werkstoffen beispielsweise auch für Sportboote, Rotorblätter für Windkraftanlagen und im Waggonbau verwendet werden.

Um die Farbeigenschaften der so hergestellten halogenhaltigen Polymere und Produkte daraus, die die erfindungsgemäße Stabilisatorzusammensetzung enthalten, zu beurteilen, wird das CIE-Lab-System verwendet. Das CIE-Lab-System ist ein von der Internationalen Beleuchtungskomission *(Commission Internationale de l'Eclairage,* CIE) 1976 festgelegter Farbraum. In diesem dreidimensionalen Farbraum sind drei Achsen definiert (L = Helligkeit (0 = Schwarz, 100 = Weiß); a = Rot-Grün (-120 = Grün, +120 = Rot); b = Gelb-Blau (-120 = Blau, +120 = Gelb)). Durch die Angaben der L*a*b*-Werte sowie der Angaben über Farbmessgerät (Spektralphotometer), Lichtart, Beobachter, Farbsystem und Probenvorbereitung lässt sich eine Farbe genau bestimmen und archivieren (siehe Diagramm in Figur 2). Somit repräsentiert der a-Wert die Farbe auf der grün-rot-Achse. Negative a-Werte zeigen einen Grünstich und positive einen Rotstich. Je höher der a-Wert ist umso stärker ist der Rotstich. Daher ist ein möglichst neutraler Wert für a in der vorliegenden Erfindung bzw. eine möglichst geringfügige Änderung dieses Wertes wünschenswert.

Die vorliegende Erfindung liefert demzufolge einen bemerkenswerten und neuen Beitrag zur Entwicklung des Standes der Technik, insbesondere für die Verarbeitung und Stabilisierung von PVC und anderen halogenhaltigen

thermoplastischen Polymeren.

Die Erfindung wird durch die nachfolgenden Beispiele näher veranschaulicht, ohne jedoch darauf beschränkt zu sein.

Beispiele

In den nachfolgenden Beispielen werden verschiedene Zusammensetzungen von PVC-Formkörpern beschrieben. Zu deren Herstellung wurden die in den Beispielen genannten Bestandteile eingewogen, in einem Labormixer kalt homogenisiert und auf einem Laborwalzwerk fünf Minuten bei 180°C homogenisiert und plastifiziert. Aus dem so hergestellten etwa 1 mm dicken Walzfell wurden zwei Probestreifen von 10*10 $cm^2$ herausgeschnitten, übereinandergelegt und bei 170°C bei 100 bar 5 min. verpresst.

Aus diesen 2 mm dicken Pressplatten wurden 2 cm breite Streifen herausgeschnitten und 168 Stunden im Stand der Technik bekannten Bandol Wheel (siehe zum Beispiel www.metrastat.com/) unter folgenden Bedingungen bestrahlt:

- eine Umdrehung pro Stunde
- 120° der Umdrehung abgeschattet
- 120° der Umdrehung in einem Wasserbecken mit dest. Wasser
  (- jeweils 60° der Abschattung sind in der Luft bzw. im dest. Wasser)
- 50°C im Probenraum
- 400 W Quecksilbermitteldrucklampe

Von der Nullprobe und von der bestrahlten Probe (Tab. 3) wurden die L*a*b-Farbwerte bestimmt

**Beispiel 1: (nicht erfindungsgemäß)**

Rezeptur (Angaben in phr)

| | |
|---|---|
| PVC (k=67) | 100 |
| gecoatete Kreide | 2 |
| Paraffinwachs (Fp ~ 100°C) | 0,1 |
| dreibasisches Bleisulfat | 0,5 |
| neutrales Bleistearat | 0,8 |
| zweibasisches Bleistearat | 0,3 |
| Calciumstearat | 0,3 |
| $TiO_2$ [1)] | 2,0 |

1) Handelsübliches Rutilpigment hergestellt nach dem Chloridverfahren 1 mit Photo-EMK-Charakterisierung in den Tab. 1 und Tab. 2

Anfangsfarbwerte:

| | |
|---|---|
| L | 94,3 |
| b | 7,8 |
| a | -0,1 |

**Beispiel 2: (nicht erfindungsgemäß)**

Rezeptur (Angaben in phr)

| | |
|---|---|
| PVC (k=67) | 100 |
| gecoatete Kreide | 2 |
| $TiO_2$ 1) | 2,0 |
| Paraffinwachs (Fp ~ 100°C) | 1,0 |
| Esterwachs | 0,2 |
| Calciumstearat | 0,3 |
| Alcamizer 1 2) | 0,7 |
| 1.3-Dimethyl-4-aminouracil | 0,3 |
| Natriumperchlorat | 0,01 |

1) Handelsübliches Rutilpigment wie in Beispiel 1
2) Handelsüblicher Hydrotalcit der Fa. Kyowa

Anfangsfarbwerte:

| | |
|---|---|
| L | 95,8 |
| b | 7,1 |
| a | -0,7 |

**Beispiel 3: (erfindungsgemäß)**

Rezeptur (Angaben in phr)

| | |
|---|---|
| PVC (k=67) | 100 |
| gecoatete Kreide | 2 |
| Kronos 1001 - $TiO_2$ 1) | 2,0 |
| Paraffinwachs (Fp ~ 100°C) | 1,0 |
| Esterwachs | 0,2 |
| Calciumstearat | 0,3 |
| Alcamizer 1 2) | 0,7 |
| 1.3-Dimethyl-4-aminouracil | 0,3 |
| Natriumperchlorat | 0,01 |

1) Handelsübliches Titaniumdioxid mit Photo-EMK-Charakterisierung in den Tab. 1 und Tab. 2
2) Handelsüblicher Hydrotalcit der Fa. Kyowa

Anfangsfarbwerte:

| | |
|---|---|
| L | 95,5 |

(fortgesetzt)

| | |
|---|---|
| b | 5,8 |
| a | -0,3 |

**Beispiel 4: (erfindungsgemäß)**

Rezeptur (Angaben in phr)

| | |
|---|---|
| PVC (k=67) | 100 |
| gecoatete Kreide | 2 |
| Kronos 1071 - $TiO_2$ [1)] | 2,0 |
| Paraffinwachs (Fp ~ 100°C) | 1,0 |
| Esterwachs | 0,2 |
| Calciumstearat | 0,3 |
| Alcamizer 1 [2)] | 0,7 |
| 1.3-Dimethyl-4-aminouracil | 0,3 |
| Natriumperchlorat | 0,01 |

[1)] Handelsübliches Titaniumdioxid mit Photo-EMK-Charakterisierung in den Tab. 1 und Tab. 2
[2)] Handelsüblicher Hydrotalcit der Fa. Kyowa

Anfangsfarbwerte:

| | |
|---|---|
| L | 93,5 |
| b | 5,6 |
| a | -0,9 |

**Beispiel 5: (erfindungsgemäß)**

Rezeptur (Angaben in phr)

| | |
|---|---|
| PVC (k=67) | 100 |
| gecoatete Kreide | 2 |
| Kronos 1080 - $TiO_2$ [1)] | 2,0 |
| Paraffinwachs (Fp ~ 100°C) | 1,0 |
| Esterwachs | 0,2 |
| Calciumstearat | 0,3 |
| Alcamizer 1 [2)] | 0,7 |
| 1.3-Dimethyl-4-aminouracil | 0,3 |

(fortgesetzt)

| | |
|---|---|
| Natriumperchlorat | 0,01 |

[1] Handelsübliches Titaniumdioxid mit Photo-EMK-Charakterisierung in den Tab. 1 und Tab. 2
[2] Handelsüblicher Hydrotalcit der Fa. Kyowa

Anfangsfarbwerte:

| | |
|---|---|
| L | 95,0 |
| b | 6,2 |
| a | -0,7 |

**Beispiel 6: (erfindungsgemäß)**

Rezeptur (Angaben in phr)

| | |
|---|---|
| PVC (k=67) | 100 |
| gecoatete Kreide | 2 |
| Kronos 1014 - $TiO_2$ [1] | 2,0 |
| Paraffinwachs (Fp ~ 100°C) | 1,0 |
| Esterwachs | 0,2 |
| Calciumstearat | 0,3 |
| Alcamizer 1 [2] | 0,7 |
| 1.3-Dimethyl-4-aminouracil | 0,3 |
| Natriumperchlorat | 0,01 |

[1] Handelsübliches Titaniumdioxid mit Photo-EMK-Charakterisierung in den Tab. 1 und Tab. 2
[2] Handelsüblicher Hydrotalcit der Fa. Kyowa

Anfangsfarbwerte:

| | |
|---|---|
| L | 95,2 |
| b | 6,0 |
| a | -0,3 |

**Beispiel 7: (nicht erfindungsgemäß)**

Rezeptur (Angaben in phr)

| | |
|---|---|
| PVC (k=67) | 100 |
| gecoatete Kreide | 2 |

(fortgesetzt)

| | |
|---|---|
| $TiO_2$ [1)] | 2,0 |
| Paraffinwachs (Fp ~ 100°C) | 1,0 |
| Esterwachs | 0,2 |
| Calciumstearat | 0,3 |
| Alcamizer 1 [2)] | 0,7 |
| 1.3-Dimethyl-4-aminouracil | 0,3 |
| Natriumperchlorat | 0,01 |

[1)] Handelsübliches Rutilpigment hergestellt nach dem Chloridverfahren 2 mit Photo-EMK-Charakterisierung in den Tab. 1 und Tab. 2

[2)] Handelsüblicher Hydrotalcit der Fa. Kyowa

Anfangsfarbwerte:

| | |
|---|---|
| L | 95,4 |
| b | 7,4 |
| a | -0,7 |

Die Charakterisierung der in den oben angegebenen Beispielen benutzten Titandioxide mittels Photo-EMK kann aus Tabelle 1 entnommen werden (Kinetische Parameter der Photo-EMK-Messung in PVB (Messbereich 0 - 2.5 μs, Signale nach dem 1. Laserblitz).

Die Messung der Photo-EMK wird wie in der vorstehenden Beschreibung angegeben durchgeführt. Im speziellen werden 100 mg des Pigments mittels Ultraschall in 3g einer 10%igen Polyvinylbutyral-Lösung in 1,2-Dichlorethan gelöst. Die Mischung wurde auf einer Glasplatte (27 $cm^2$) aufgetragen. Nach dem Trocknen des Pigments wurde die Polymerschicht von dem Glasträger entfernt. Das restliche Lösungsmittel wird im Vakuum entfernt. Die Probe(n) werden in die Messzelle eingebaut und mit einem Blitz des Stickstofflasers ("PNL100"; LTB Lasertechnik Berlin, $\lambda_{flash}$ = 337 nm, $\tau_{1/2}$ = 0.3 ns, 2.7 x $10^{13}$ Quanten pro Lichtblitz) bestrahlt. Die sich in der Probe aufbauende Spannung wird an den Elektroden (wie oben angegeben) stromlos abgegriffen, d.h. ohne galvanischen Kontakt gemessen, da sich isolierende Folien zwischen der Probe und den Elektroden befinden. Dies verhindert Ladungsinjektion von den Elektroden in die Probe. Der Preamplifier hat eine Impedanz von ungefähr 1 TΩ und die Photo-EMK Messung findet ohne ein externes elektrisches Feld statt. Die maximale Zeitauflösung ist ungefähr 40 ns. Alle Experimente wurden unter Normaldruck und bei 25°C durchgeführt. In allen Fällen wurde das Signal des ersten Laserblitzes aufgenommen. In weiteren Versuchsexperimenten war der Zeitunterschied zwischen zwei Blitzen 120s (Akquisitionsmessung). Eine detaillierte Beschreibung der verwendeten Photo-EMK Apparatur ist in G. Israel et al., J. Inform. Rec. 23 (1997), 559-584.

Der Maximalwert der Photo-EMK wird unmittelbar aus den experimentellen Kurven ermittelt, wobei die Kurven nach einem biexponentiellen Zeitgesetz kinetisch ausgewertet, wodurch die Lebensdauer der Ladungsträger in Oberflächennähe und im Volumen bestimmt werden kann.

Die Ergebnisse der einzelnen Messungen sind auch aus den Tabellen 1 und 2 sowie den Figuren 3 bis 8 zu entnehmen.

Tabelle 1: Photo-EMK-Werte der Titandioxide aus den Beispielen 1-7

| Probe | $U_{max}$/mV | $U_1$/mV | $U_2$/mV | $10^{-6}k_1$*s | $10^{-5}k_2$*s |
|---|---|---|---|---|---|
| Kronos 1001 | ~ 48 (S) | | | | |
| Kronos 1014 | ~ 24 (S) | | | | |
| Kronos 1071 | ~ 16 (S) | | | | |
| Kronos 1080 | ~ 12 (S) | | | | |
| $TiO_2$ (Bsp. 7) | -26.3 | -5.6 | -20.6 | 2.8 | 0.6 |

(fortgesetzt)

| Probe | $U_{max}$/mV | $U_1$/mV | $U_2$/mV | $10^{-6}k_1$*s | $10^{-5}k_2$*s |
|---|---|---|---|---|---|
| $TiO_2$ (Bsp. 1) | -20.5 | -15.2 | -5.3 | 12.9 | 4.7 |
| S: nur der Anstieg des Signals, aber keine Desaktivierung beobachtet; **die Werte für $U_1$, $U_2$, $k_1$ und $k_2$ sind im** µs-Bereich nicht berechenbar. | | | | | |

Die weitere Charakterisierung der in den oben angegebenen Beispielen benutzten Titandioxide mittels Photo-EMK kann aus Tabelle 2 entnommen werden (Kinetische Parameter der Photo-EMK-Messung in PVB (Messbereich 0 - 200 ms, Signale nach dem 1. Laserblitz).

Tabelle 2: Photo-EMK-Werte der Titandioxide aus den Beispielen 1-7

| Probe | Umax/mV | $U_1$/mV | $U_2$/mV | $k_1$*s | $k_2$*s |
|---|---|---|---|---|---|
| Kronos 1001 | 60.2 | 418 | -412 | 51 | 45 |
| Kronos 1014 | 19.2 | 255 | -253 | 45 | 44 |
| Kronos 1071 | 14.3 | 163 | -162 | 47 | 46 |
| Kronos 1080 | 12.2 | 1500 | -1487 | 48 | 47 |
| $TiO_2$ (Bsp. 7) | 1.0 | 252 | -250 | 43 | 42 |
| $TiO_2$ (Bsp. 1) | -10.0 | -247 | 237 | 60 | 43 |

**Beispiel 8:**

In Tabelle 3 sind die Änderungen der a-Werte der oben hergestellten Beispielpolymere bei Bestrahlung im Bandol Wheel (50°C) angegeben.

Tabelle 3:

| Beispiel | a-Werte nach 0 Stunden | a-Werte nach 168 Stunden |
|---|---|---|
| 1 | -0.1 | -0.4 |
| 2 | -0.7 | 1.4 |
| 3 | -0.3 | -0.8 |
| 4 | -0.9 | -0.3 |
| 5 | -0.7 | -0.6 |
| 6 | -0.3 | 0.0 |
| 7 | -0.7 | 1.6 |

Bei den nicht erfindungsgemäßen Beispielen 2 und 7, die 1,3-Diemthyl-4-aminouracil-haltige Rezepturen enthalten, zeigen die ermittelten a-Werte schon nach kurzer, aber intensiver Bestrahlungszeit eine deutlich positive, sprich ins "rote" gehende Farbveränderung an. Bei dem nicht erfindungsgemäßen Beispiel 1 auf der Basis von Bleistabilisatoren und ohne 1,3-Dimethyl-4-aminouracil bleibt der a-Wert negativ, sprich grün.

Die erfindungsgemäßen Beispiel 3, 4, 5 und 6 hingegen zeigen einen deutlichen Effekt durch den Einfluss der erfindungsgemäßen Stabilisatorverbindungen. Zum einen sind nur sehr geringfügige Änderungen zu erkennen und die a-Werte sind nur leicht negativ, d.h. maximal ist ein leichter Grünstich ist zu beobachten. Somit kann eine Rosverfärbung der Polymere und der daraus hergestellten Produkte, zum Beispiel Fensterprofile, verhindert werden.

Beispiel 9:

Aus der folgenden Tabelle 3 sind weitere nach dem oben angegeben Verfahren hergestellte Beispiele zu entnehmen. In Tabelle 3 wird die Photo-EMK und die Fähigkeit zur Stabilisierung von halogenhaltigen Polymeren an den unterschiedlichsten Titandioxiden dargelegt. Aus Tabelle 3 wird offensichtlich, das die halogenhaltigen Polymere,

die mit Titandioxiden (und einer Stickstoffverbindung) stabilisiert sind, die nicht die erfindungsgemäße Photo-EMK zeigen, nach 120h bzw. 180h im Bandon-Wheel Experiment eine deutliche Rosaverfärbung zeigen (siehe Δa 120 und Δa 180-Werte).

Figur 9 enthält die grafische Darstellung der Δa-Werte (Nach 120h im Bandol Wheel) gegen die $U_{max}$-Werte aus tabelle 3 nach herausgerechneter Anfangsfarbe.

Tabelle 3: Untersuchungsergebnisse

| Probe [1, 2] | | | L(0) | b(0) | a (0) | Umax[3] | Umax[4] | Umax[5] | Umax[6] | Δa 120 | Δa 180 |
|---|---|---|---|---|---|---|---|---|---|---|---|
| **Kronos 1001** | | 1 | 95.28 | 5.81 | -0.28 | 60.2 | 57.7 | ***48.0*** | ***47.0*** | -0.60 | -0.35 |
| **Kronos 1014** | | 20 | 95.52 | 6.00 | -0.30 | 19.2 | 16.6 | ***24.0*** | ***17.0*** | -0.02 | 0.55 |
| **Kronos 1071** | | 2 | 93.49 | 5.58 | -0.90 | 14.3 | 13.3 | ***16.0*** | ***13.0*** | 0.35 | 0.70 |
| **Kronos 1080** | | 21 | 94.95 | 6.22 | -0.68 | 12.2 | 10.6 | ***12.0*** | ***9.0*** | -0.16 | 0.17 |
| Kronos 2044 | | 15 | 94.87 | 8.31 | -0.80 | -2.0 | -2.0 | -7.3 | -7.2 | 0.75 | 1.25 |
| Kronos 2056 | | 11 | 95.03 | 8.10 | -0.68 | -4.3 | -3.4 | -18.8 | -19.3 | 0.81 | 1.24 |
| Kronos 2059 | | 17 | 95.43 | 7.02 | -0.52 | 7.6 | 7.5 | -3.0 | -2.8 | 0.79 | 1.17 |
| Kronos 2073 | | 27 | 96.02 | 6.43 | -0.55 | -2.9 | -3.2 | -18.4 | -18.6 | 0.99 | 1.37 |
| Kronos 2075 | | 23 | 96.00 | 6.43 | -0.61 | -1.9 | -2.4 | -16.6 | -17.4 | 0.64 | 1.02 |
| Kronos 2081 | | 9 | 95.21 | 7.64 | -0.62 | -7.1 | -7.7 | -25.9 | -25.8 | 0.96 | 1.42 |
| Kronos 2084 | | 5 | 95.40 | 7.38 | -0.65 | -10.0 | -10.5 | -26.3 | -25.8 | 0.93 | 1.29 |
| Kronos 2087 | | 8 | 94.38 | 7.79 | -0.33 | -22.7 | -20.4 | -37.6 | -37.2 | 0.94 | 1.25 |
| Kronos 2160 | | 12 | 95.59 | 6.97 | -0.63 | -1.8 | -1.81 | -14.8 | -14.5 | 0.86 | 1.29 |
| Kronos 2190 | | 16 | 95.14 | 7.40 | -0.541 | 7.6 | 7.5 | -4.4 | -4.6 | 0.76 | 1.13 |
| Kronos 2220 | | 10 | 95.76 | 7.09 | -0.70 | 1.0 | 1.0 | -20.5 | -19.7 | 1.10 | 1.47 |
| Kronos 2222 | | 22 | 95.95 | 5.96 | -0.51 | 2.3 | 2.2 | -8.6 | -8.2 | 1.22 | 1.65 |
| Kronos 2310 | | 13 | 95.79 | 7.08 | -0.69 | 1.7 | 1.6 | -13.3 | -13.3 | 1.12 | 1.57 |
| Kronos 2400 | | 14 | 95.97 | 5.96 | -0.46 | 1.4 | -1.8 | -9.0 | -11.1 | 0.61 | 0.96 |

(fortgesetzt)

| Probe [1], [2] | | | L(0) | b(0) | a (0) | Umax[3] | Umax[4] | Umax[5] | Umax[6] | Δa 120 | Δa 180 |
|---|---|---|---|---|---|---|---|---|---|---|---|
| Kronos 3025 | | 6 | 89.74 | 11.28 | -0.61 | 19.2 | 16.6 | -35.4 | -37.6 | 1.66 | 2.84 |

[1] rote L a b-Werte wurden aus Zeile 9, 10 bzw. 12 übernommen, die Photo-EMK-Werte sind Doppelmessungen
[2] blaue Werte entsprechen dem geschätzten Umax aus der Graphik
[3] Umax im ms-Bereich, 1 Blitz
[4] Umax im ms-Bereich, Aquisition
[5] Umax im μs-Bereich, 1 Blitz
[6] Umax im μs-Bereich, Aquistion

## Patentansprüche

1. Stabilisatorzusammensetzung für halogenhaltige Polymere enthaltend Titandioxid und mindestens eine stickstoffhaltige Verbindung, wobei das Titandioxid eine Photo-Elektromotorische Kraft (Photo-EMK) im μs-Bereich > -15mV und eine Photo-Elektromotorische Kraft im ms-Bereich > +5mV hat, wobei die stickstoffhaltige Verbindung aus der Gruppe, die aus einer heterocyclischen Verbindung, einem Amin und einem Aminocrotonsäureester besteht, ausgewählt wird, wobei die heterocyclische Verbindung aus der Gruppe, die aus substituiertem oder unsubstituiertem Uracil, Pyrimidon und Indol besteht, ausgewählt wird und wobei der Aminocrotonsäureester die allgemeinen Formel III hat

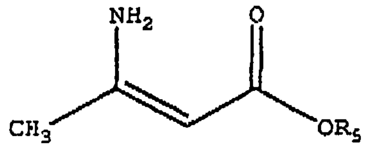

(III)

wobei $R_5$ H, $C_1$-$C_{18}$ Alkyl, $C_2$-$C_6$ Alkenyl, $C_1$-$C_4$ Alkoxy, $C_5$-$C_8$ Cycloalkyl, oder $C_5$-$C_{10}$ Aryl sein kann, oder wobei $R_5$ so gewählt wird, das ein symmetrischer Aminocrotonsäureester entsteht.

2. Stabilisatorzusammensetzung nach Anspruch 1, wobei das Titandioxid eine Photo-Elektromotorische Kraft im μs-Bereich > - 10mV und eine Photo-Elektromotorische Kraft im ms-Bereich > +10mV hat.

3. Stabilisatorzusammensetzung nach Anspruch 1, wobei das Uracil die folgende Formel I

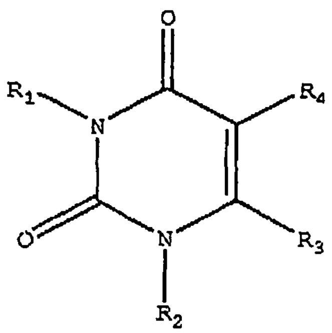

(I)

hat, wobei
$R_1$, $R_2$, $R_3$ und $R_4$ unabhängig voneinander H, $C_1$-$C_{18}$ Alkyl, $C_2$-$C_6$ Alkenyl, $C_1$-$C_4$ Alkoxy, $C_5$-$C_8$ Cycloalkyl, $C_5$-$C_{10}$ Aryl. sind, wobei $R_3$ und $R_4$ unabhängig voneinander $NHR_5$ sein können, wobei $R_5$ unabhängig zu $R_1$ oder $R_2$ H, $C_1$-$C_{18}$ Alkyl, $C_2$-$C_6$ Alkenyl, $C_1$-$C_4$ Alkoxy, $C_5$-$C_8$ Cycloalkyl, $C_5$-$C_{10}$ Aryl ist.

4. Stabilisatorzusammensetzung nach Anspruch 1, wobei die Stickstoffverbindung die folgende Formel II hat,

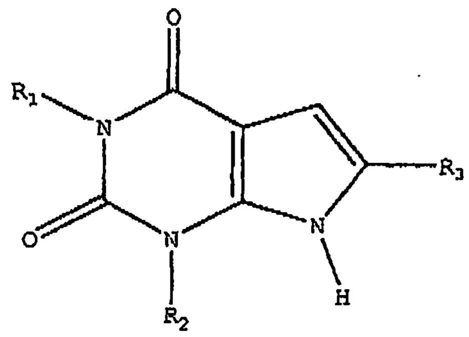

(T.I)

wobei $R_1$, $R_2$ und $R_3$ unabhängig voneinander H, $C_1$-$C_{18}$ Akyl, $C_2$-$C_6$ Alkenyl, $C_1$-$C_4$ Alkoxy, $C_5$-$C_8$ Cycloalkyl, $C_5$-$C_{10}$ Aryl sind.

5. Stabilisatorzusammensetzung nach Anspruch 1, wobei der Aminocrotonsäureester Butylenglycolaminocrotonat oder Thioethylenglycolaminocrotonat ist.

6. Stabilisatorzusammensetzung gemäß Anspruch 3, wobei das Uracil 1,3-Dimethyl-4-aminouracil ist.

7. Stabilisatorzusammensetzung gemäß einem der vorangegangenen Ansprüche, wobei das Titandioxid in einer Menge von ungefähr 0.05 bis ungefähr 15.0 pro 100 Teile Harz (phr) vorhanden ist.

8. Stabilisatorzusammensetzung gemäß Anspruch 7, wobei das Titandioxid in einer Menge von ungefähr 0.1 bis ungefähr 10.0 phr vorhanden ist.

9. Stabilisatorzusammensetzung gemäß einem der vorangehenden Ansprüche, die zusätzlich mindestens einen Co-Stabilisator enthält.

10. Stabilisatorzusammensetzung gemäß einem der vorangehenden Ansprüche, die zusätzlich Primärstabilisatoren, Zeolithe, Antioxidantien, Füllstoffe, Weichmacher, Farbstoffe, Pigmente, Antistatikamittel, oberflächenaktive Agenzien, Schaumbildner, Schlagzähmodifizicrer und/oder UV-Stabilisatoren enthält.

11. Stabilisatorzusammensetzung gemäß einem der vorangehenden Ansprüche, wobei das Titandioxid Rutil-oder Anatasstruktur aufweist.

12. Stabilisatorzusammensetzung gemäß einem der vorangehenden Ansprüche, wobei das halogenhaltige Polymer PVC ist.

13. Stabilisatorzusammensetzung gemäß einem der vorangehenden Ansprüche, wobei die Photo-EMK durch ein Verfahren gemessen wird, das umfasst:

- Einspannen der Probe zwischen einer Front- und einer Rückelektrode
- Belichten der Probe mit einem kurzen Lichtblitz, wobei die Wellenlänge des Anregungsblitzes 337 nm und die Pulsdauer 0.3 ns beträgt,
- Messen der Spannung mit einem hochohmigen Spannungsmeßgerät.

14. Verwendung einer Stabilisatorzusammensetzung gemäß einem der Ansprüche 1 bis 13 zur Stabilisierung von halogenhaltigen Polymeren.

15. Verwendung gemäß Anspruch 14, wobei die Stabilisierung gegenüber Lichteinwirkung ist.

16. Verwendung gemäß Anspruch 14 oder 15, wobei das halogenhaltige Polymer PVC ist.

17. Formkörper umfassend ein halogenhaltiges Polymer enthaltend eine Stabilisatorzusammensetzung gemäß den Ansprüchen 1 bis 13.

18. Formkörper aus halogenhaltigem Polymer, enthaltend eine Stetbilisatorzusammensetzung gemäß den Ansprüchen

1 bis 13.

**19.** Formkörper gemäß Anspruch 17 oder 18, wobei der Formkörper Fensterprofile, Rohre, Fußbodenbeläge, Dachbahnen, Kabel und Folien sein kann.

## Claims

**1.** Stabilizer composition for halogenated polymers comprising titanium oxide and at least one nitrogen containing compound, wherein said titanium oxide has a photo-electromotive force (photo-emf) in the μs-range > -15 mV and a photo-electromotive force in the ms-range > +5 mV, wherein the nitrogen containing compound is selected from the group consisting of a heterocyclic compound, an amine, and an amino crotonic acid ester, wherein the heterocyclic compound is selected from the group consisting of substituted or unsubstituted uracil, pyrimidone, and indole, and wherein the amino crotonic acid ester is of the general Formula III

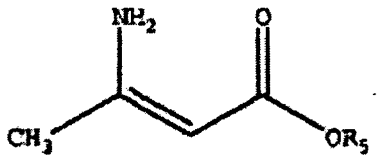

(III) ,

wherein $R_5$ can be H, $C_1$-$C_{18}$ alkyl, $C_2$-$C_6$ alkenyl, $C_1$-$C_4$ alkoxy, $C_5$-$C_8$ cycloalkly, or $C_5$-$C_{10}$ aryl or wherein $R_5$ is selected such that a symmetric amino crotonic acid ester is formed.

**2.** Stabilizer composition according to claim 1, wherein the titanium oxide has a photo-electromotive force in the μs-range > -10 mV and a photo-electromotive force in the ms-range > +10 mV.

**3.** Stabilizer composition according to claim 1, wherein uracil is of the general Formula I.

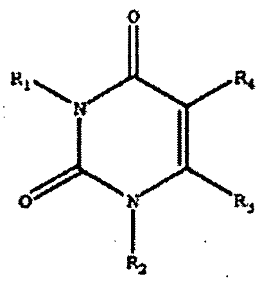

(I) ,

wherein
$R_1$, $R_2$, $R_3$, and $R_4$ are independently from each other H, $C_1$-$C_{18}$ alkyl, $C_2$-$C_6$ alkenyl, $C_1$-$C_4$ alkoxy, $C_5$-$C_8$ cycloalkyl, $C_5$-$C_{10}$ aryl, wherein $R_3$ and $R_4$ can be independently from each other $NHR_5$, wherein $R_5$ is independently from $R_1$ or $R_2$ H, $C_1$-$C_{18}$ alkyl, $C_2$-$C_6$ alkenyl, $C_1$-$C_4$ alkoxy, $C_5$-$C_8$ cycloalkyl, $C_5$-$C_{10}$ aryl.

**4.** Stabilizer composition according to claim 1, wherein the nitrogen containing compound is of the general Formula II

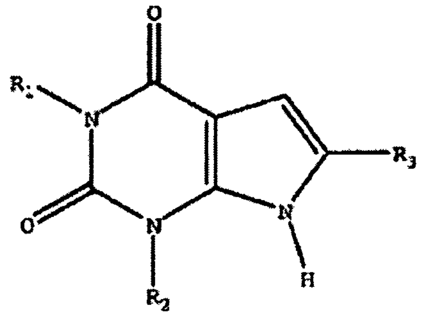

(II)

,

wherein $R_1$, $R_2$, and $R_3$ are independently from each other H, $C_1$-$C_{18}$ alkyl, $C_2$-$C_6$ alkenyl, $C_1$-$C_4$ alkoxy, $C_5$-$C_8$ cycloalkyl, $C_5$-$C_{10}$ aryl.

**5.** Stabilizer composition according to claim 1, wherein the amine crotonic acid ester is butylene glycol aminocrotonate or thioethylene glycol aminocrotonate.

**6.** Stabilizer composition according to claim 3, wherein the uracil is 1,3-dimethyl-4-aminouracil.

**7.** Stabilizer composition according to any of the previous claims, wherein titanium oxide is present in an amount from about 0.05 to about 15.0 parts per hundred resin (phr).

**8.** Stabilizer composition according to claim 7, wherein titanium oxide is present in an amount of from about 0.1 to about 10.0 phr.

**9.** Stabilizer composition according to any of the previous claims, containing additionally at least one co-stabilizer.

**10.** Stabilizer composition according to any of the previous claims, additionally containing primary stabilizers, zeolites, antioxidants, fillers, plasticizers, dyes, pigments, anti-static agents, surfactants, foaming agents, impact modifiers and/or UV stabilizers.

**11.** Stabilizer composition according to any of the previous claims, wherein titanium oxide has a rutile or anatas structure.

**12.** Stabilizer composition according to any of the previous claims, wherein the halogenated polymer is PVC.

**13.** Stabilizer composition according to any of the previous claims, wherein the photo-emf is measured by a method comprising:

- Inserting a sample between a front and a back electrode,
- Exposing the sample to a short flash of light, wherein the wavelength of the excitation light flash is 337 nm and the pulse duration is 0.3 ns,
- Measuring the voltage with a high-impedance voltameter.

**14.** Use of a stabilizer composition according to any one of claims 1 to 13 for stabilization of halogenated polymers.

**15.** Use according to claim 14, wherein the stabilization is against the effect of light.

**16.** Use according to claim 14 or 15, wherein the halogenated polymer is PVC.

**17.** Molded body comprising a halogenated polymer comprising a stabilizer composition according to claims 1 to 13.

**18.** Molded body formed from a halogenated polymer, comprising a stabilizer composition according to claims 1 to 13.

**19.** Molded body according to claims 17 or 18, wherein the molded body can be window profiles, pipes, floor coverings, roof sheetings, cables, and films.

## Revendications

1. Composition stabilisante pour des polymères halogénés contenant du dioxyde de titane et au moins un composé azoté, **caractérisée en ce que** le dioxyde de titane a une force photo-électromotrice (f.p.e.m.) dans la plage µs > -15 mV et une force photoélectromotrice dans la plage ms > +5 mV, **en ce que** le composé azoté est choisi dans le groupe constitué par un composé hétérocyclique, une amine et un ester d'acide aminocrotonique, le composé hétérocyclique étant choisi dans le groupe constitué par l'uracil substitué ou non substitué, la pyrimidone et l'indole, et l'ester d'acide aminocrotonique a pour formule générale III

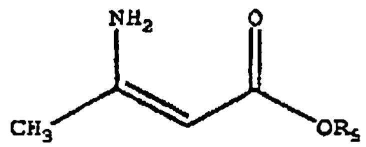

(III)

dans laquelle $R_5$ peut être H, un groupe alkyle en $C_1$-$C_{18}$, alcényle en $C_2$-$C_6$, alcoxy en $C_1$-$C_4$, cycloalkyle en $C_5$-$C_8$, ou aryle en $C_5$-$C_{10}$, ou dans laquelle $R_5$ est choisi de manière à donner un ester d'acide aminocrotonique symétrique.

2. Composition stabilisante selon la revendication 1, **caractérisée en ce que** le dioxyde de titane a une force photo-électromotrice dans la plage µs > -10 mV et une force photoélectromotrice dans la plage ms > +10 mV.

3. Composition stabilisante selon la revendication 1, **caractérisée en ce que** l'uracil a la formule I suivante

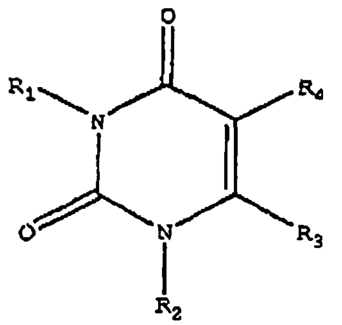

(I)

dans laquelle $R_1$, $R_2$, $R_3$ et $R_4$, sont, indépendamment les uns des autres, H, un groupe alkyle en $C_1$-$C_{18}$, alcényle en $C_2$-$C_6$, alcoxy en $C_1$-$C_4$, cycloalkyle en $C_5$-$C_8$, aryle en $C_5$-$C_{10}$, $R_3$ et $R_4$ pouvant être indépendamment $NHR_5$, $R_5$ étant, indépendamment de $R_1$ ou de $R_2$, H, un groupe alkyle en $C_1$-$C_{18}$, alcényle en $C_2$-$C_6$, alcoxy en $C_1$-$C_4$, cycloalkyle en $C_5$-$C_8$, aryle en $C_5$-$C_{10}$.

4. Composition stabilisante selon la revendication 1, **caractérisée en ce que** le composé azote a la formule II suivante

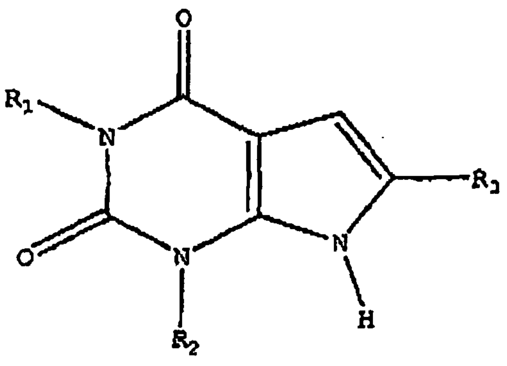

(II)

dans laquelle $R_1$, $R_2$ et $R_3$, sont, indépendamment les uns des autres, H, un groupe alkyle en $C_1$-$C_{18}$, alcényle en $C_2$-$C_6$, alcoxy en $C_1$-$C_4$, cycloalkyle en $C_5$-$C_8$, aryle en $C_5$-$C_{10}$.

**5.** Composition stabilisante selon la revendication 1, **caractérisée en ce que** l'ester d'acide aminocrotonique est l'aminocrotonate de butylène glycol ou l'aminocrotonate de thioéthylène glycol.

**6.** Composition stabilisante selon la revendication 3, **caractérisée en ce que** l'uracil est le 1,3-diméthyl-4-aminouracil.

**7.** Composition stabilisante selon l'une des revendications précédentes, **caractérisée en ce que** le dioxyde de titane est présent en une quantité d'environ 0,05 à environ 15,0 pour 100 parties de résine (phr).

**8.** Composition stabilisante selon la revendication 7, **caractérisée en ce que** le dioxyde de titane est présent en une quantité d'environ 0,1 à environ 10,0 phr.

**9.** Composition stabilisante selon l'une des revendications précédentes, qui comprend en plus au moins un co-stabilisant.

**10.** Composition stabilisante selon l'une des revendications précédentes, qui comprend en plus des stabilisants primaires, des zéolithes, des antioxydants, des charges, des plastifiants, des colorants, des pigments, des antistatiques, des agents tensioactifs, des agents moussants, des modificateurs de rhéologie et/ou des stabilisants UV.

**11.** Composition stabilisante selon l'une des revendications précédentes, **caractérisée en ce que** le dioxyde de titane présente une structure rutile ou anatase.

**12.** Composition stabilisante selon l'une des revendications précédentes, **caractérisée en ce que** le polymère halogéné est un PVC.

**13.** Composition stabilisante selon l'une des revendications précédentes, **caractérisée en ce que** la f.p.e.m. est mesurée par le biais d'un procédé comprenant :

- l'insertion d'un échantillon entre une électrode frontale et une électrode dorsale
- l'éclairage de l'échantillon avec un court éclair lumineux, la longueur d'ondes de l'éclair d'excitation étant de 337 nm et la durée d'impulsion de 0,3 ns,
- la mesure de la tension avec un voltmètre à impédance élevée.

**14.** Utilisation d'une composition stabilisante selon l'une des revendications 1 à 13 pour la stabilisation des polymères halogénés.

**15.** Utilisation selon la revendication 14, **caractérisée en ce que** la stabilisation est une stabilisation vis-à-vis de l'action de la lumière.

**16.** Utilisation selon la revendication 14 ou 15, **caractérisée en ce que** le polymère halogéné est le PVC.

**17.** Corps moulé comprenant un polymère halogéné contenant une composition stabilisante selon les revendications 1 à 13.

**18.** Corps moulé constitué d'un polymère halogéné, contenant une composition stabilisante selon les revendications 1 à 13.

**19.** Corps moulé selon la revendication 17 ou 18, **caractérisé en ce que** le corps moulé peut être des profilés de fenêtre, des tubes, des revêtements de sol, des couvertures de toit, des câbles et des films.

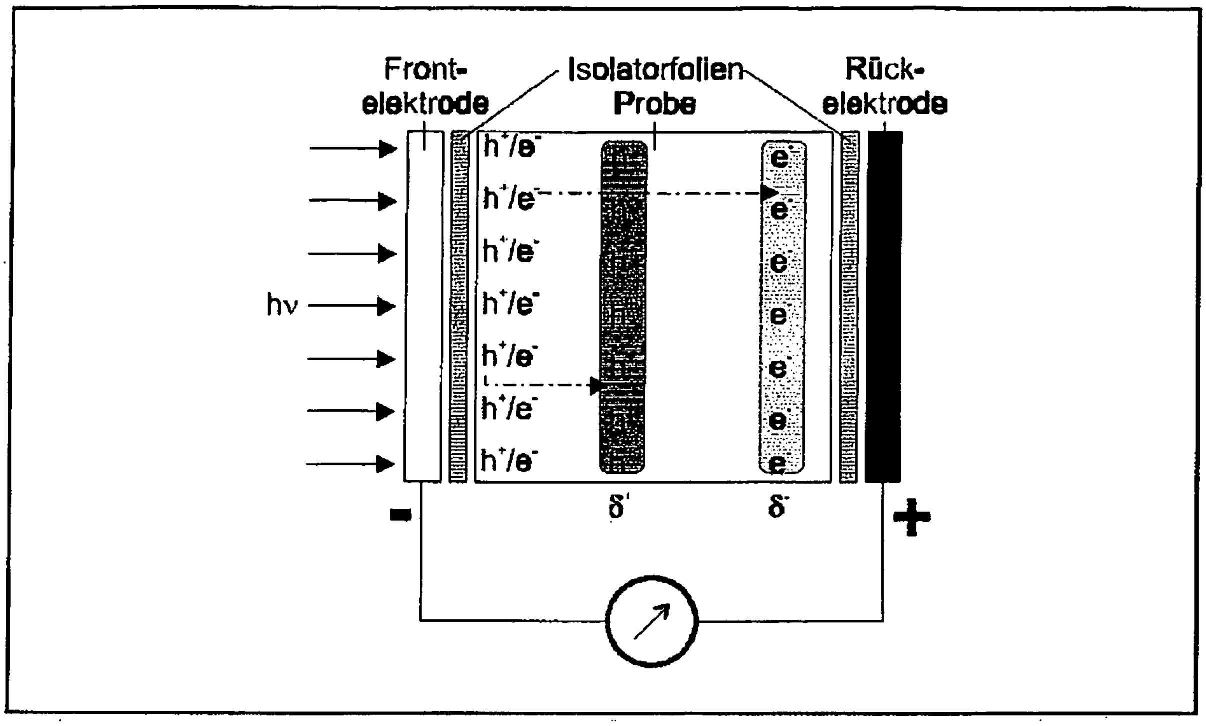
Front-
elektrode
Isolatorfolien
Probe
Rück-
elektrode
hν
h⁺/e⁻
e⁻
δ'
δ⁻
-
+

Figur 1

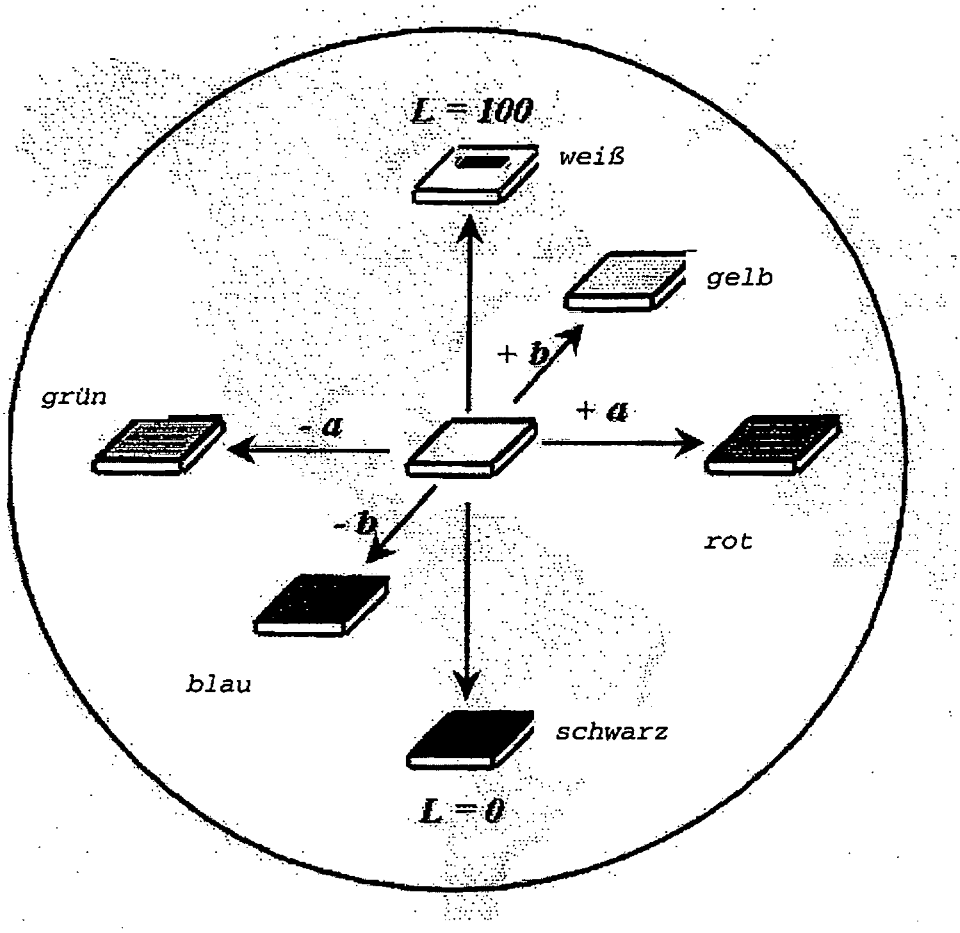


Figur 2

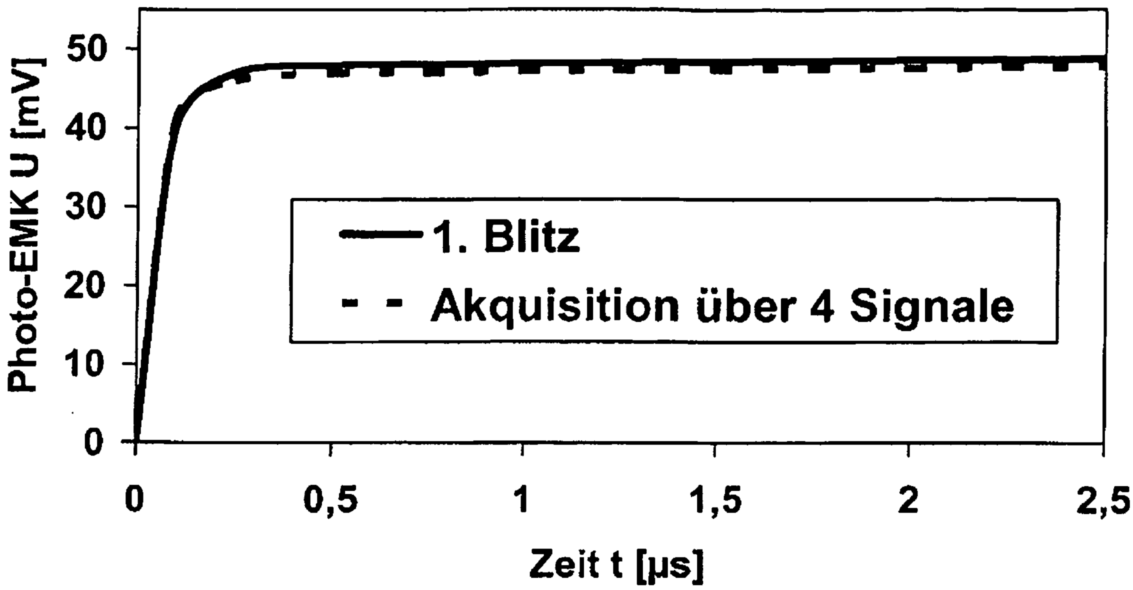
Photo-EMK U [mV]
50
40
30
20
10
0
0
0,5
1
1,5
2
2,5
Zeit t [µs]
1. Blitz
Akquisition über 4 Signale

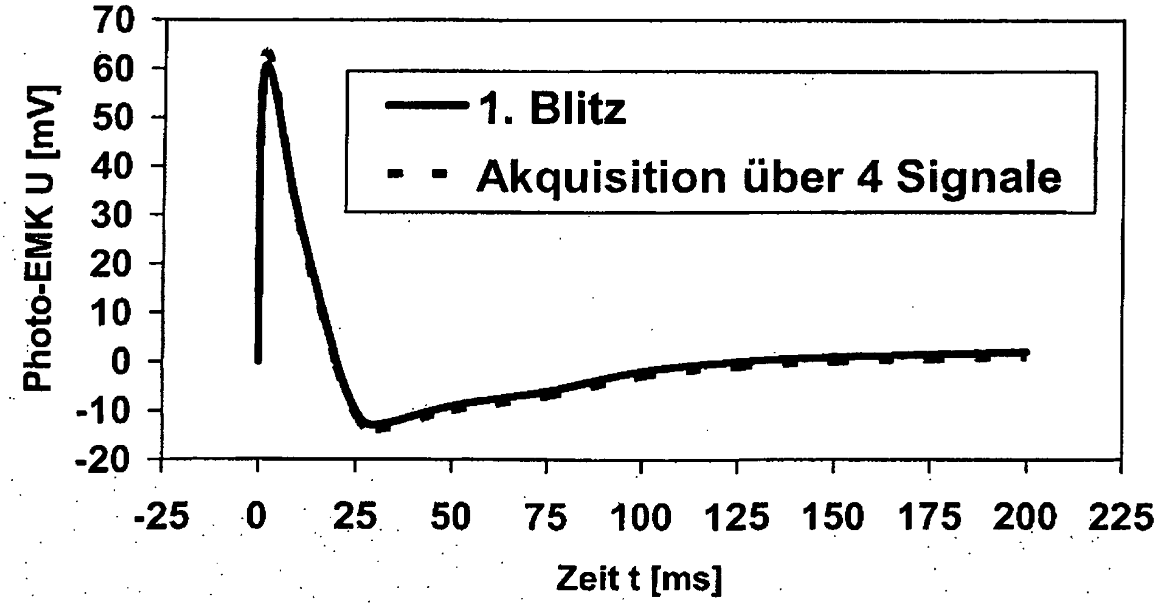
Photo-EMK U [mV]
70
60
50
40
30
20
10
0
-10
-20
-25
0
25
50
75
100
125
150
175
200
225
Zeit t [ms]
1. Blitz
Akquisition über 4 Signale

Figur 3

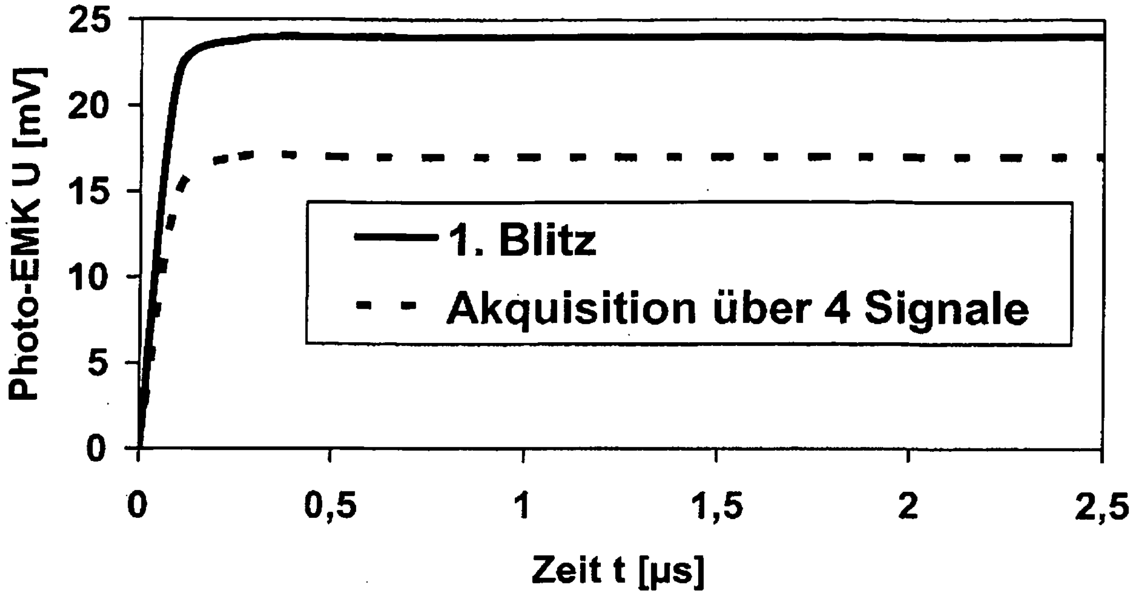
25
20
15
10
5
0
Photo-EMK U [mV]
1. Blitz
Akquisition über 4 Signale
0
0,5
1
1,5
2
2,5
Zeit t [µs]

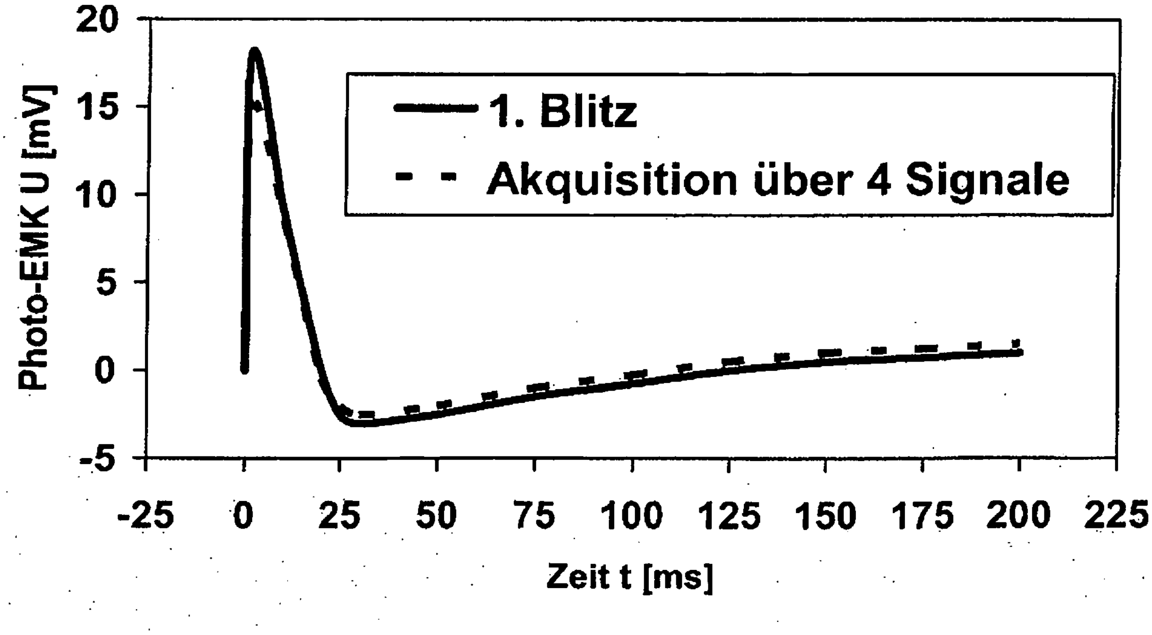
20
15
10
5
0
-5
Photo-EMK U [mV]
1. Blitz
Akquisition über 4 Signale
-25
0
25
50
75
100
125
150
175
200
225
Zeit t [ms]

Figur 4

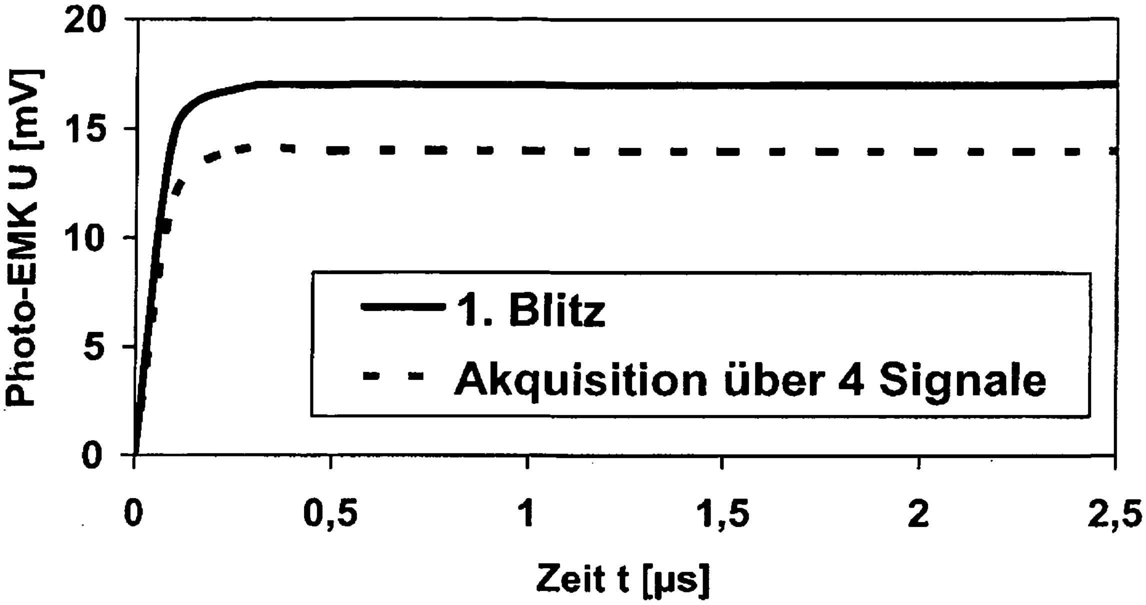
20
15
10
5
0
Photo-EMK U [mV]
1. Blitz
Akquisition über 4 Signale
0
0,5
1
1,5
2
2,5
Zeit t [µs]

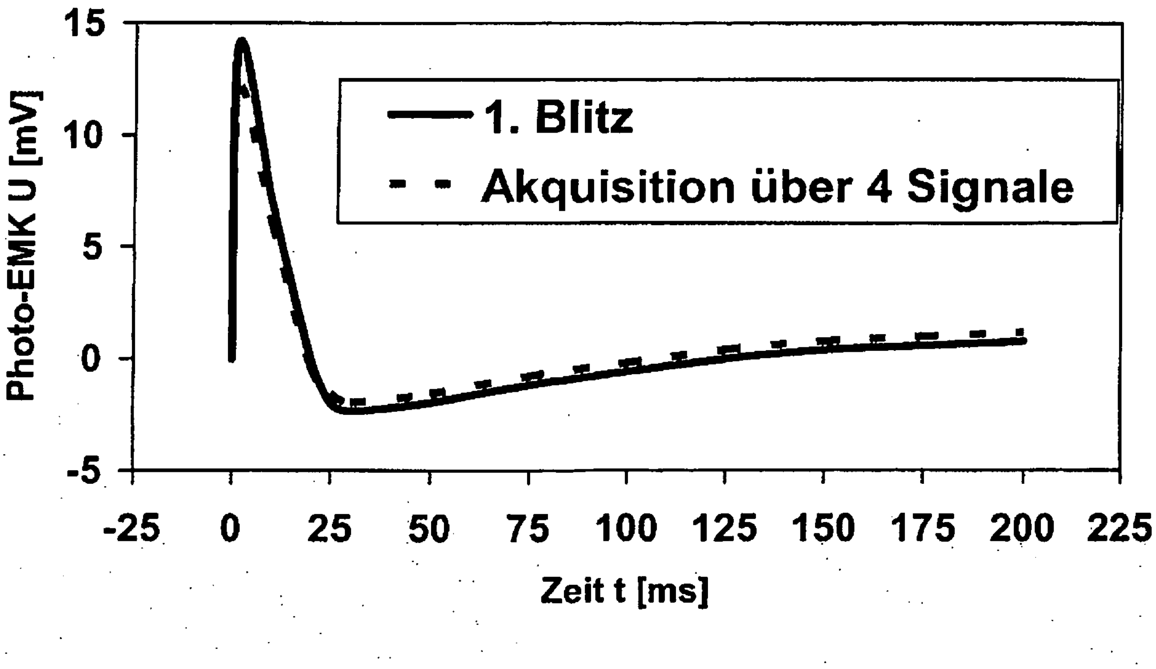
15
10
5
0
-5
Photo-EMK U [mV]
1. Blitz
Akquisition über 4 Signale
-25
0
25
50
75
100
125
150
175
200
225
Zeit t [ms]

Figur 5

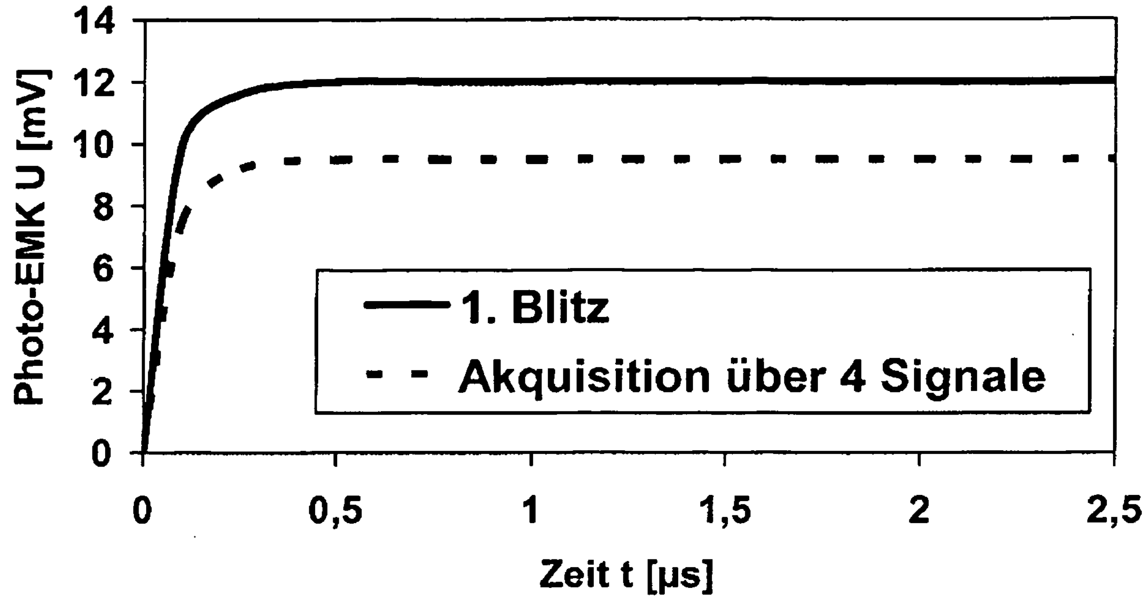
Photo-EMK U [mV]
14
12
10
8
6
4
2
0
0
0,5
1
1,5
2
2,5
Zeit t [µs]
1. Blitz
Akquisition über 4 Signale

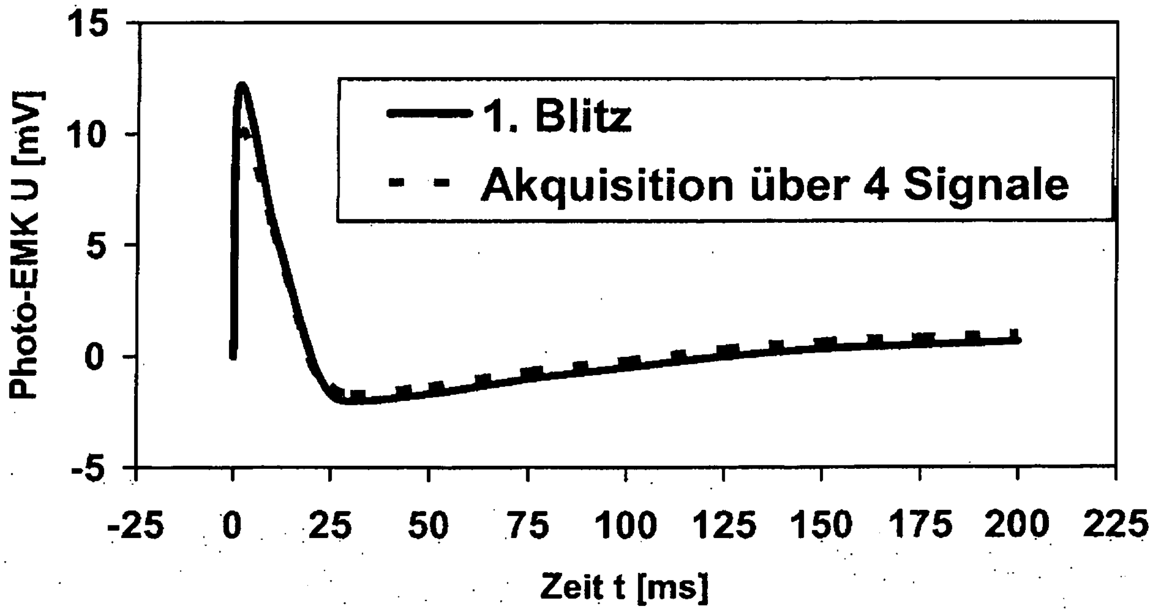
Photo-EMK U [mV]
15
10
5
0
-5
-25
0
25
50
75
100
125
150
175
200
225
Zeit t [ms]
1. Blitz
Akquisition über 4 Signale

Figur 6

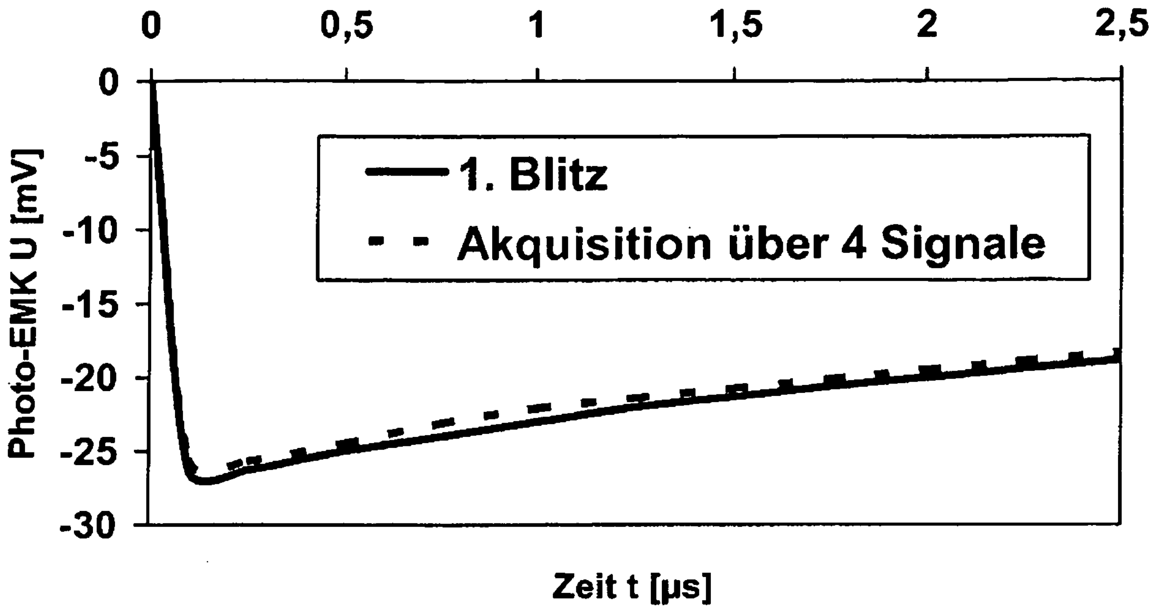
0
0,5
1
1,5
2
2,5
0
-5
-10
-15
-20
-25
-30
Photo-EMK U [mV]
1. Blitz
Akquisition über 4 Signale
Zeit t [µs]

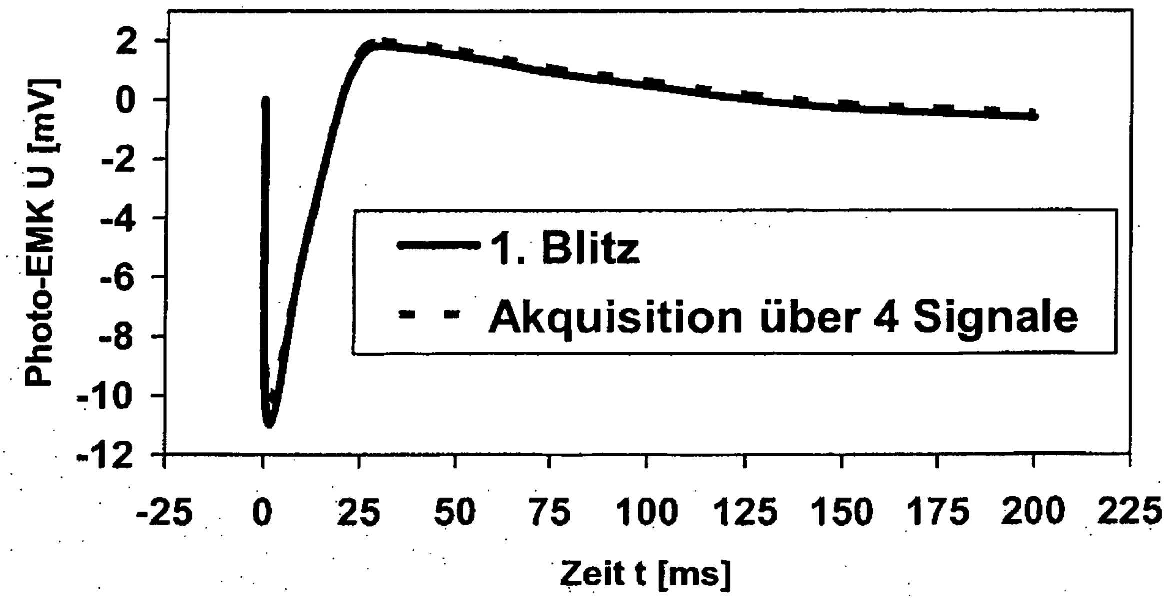
2
0
-2
-4
-6
-8
-10
-12
Photo-EMK U [mV]
1. Blitz
Akquisition über 4 Signale
-25
0
25
50
75
100
125
150
175
200
225
Zeit t [ms]

Figur 7

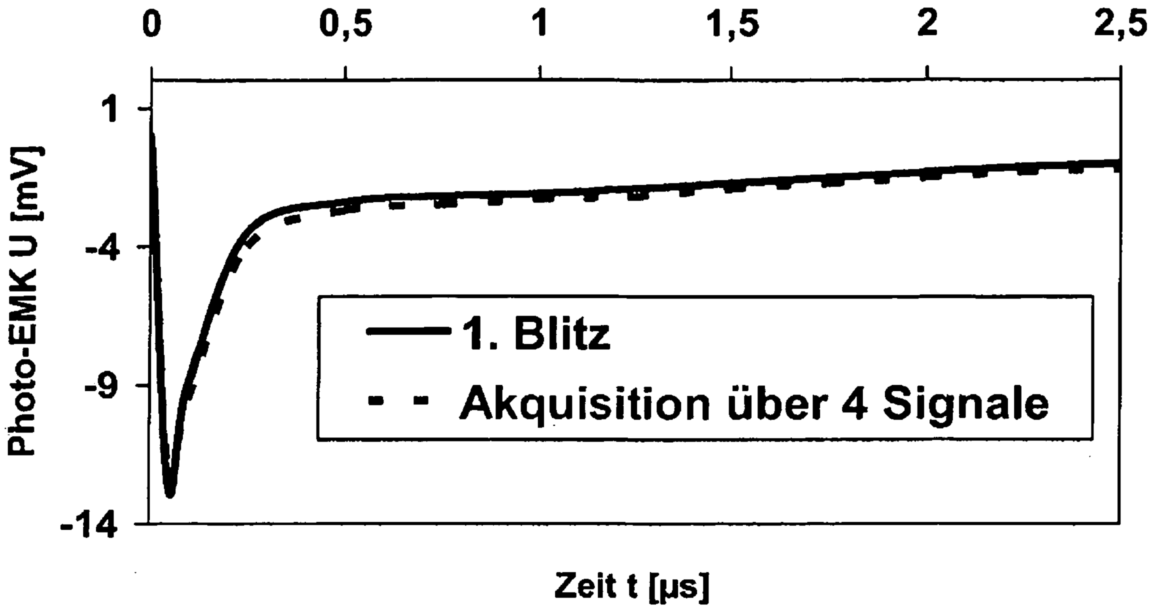

0
0,5
1
1,5
2
2,5
1
-4
-9
-14
Photo-EMK U [mV]
1. Blitz
Akquisition über 4 Signale
Zeit t [µs]


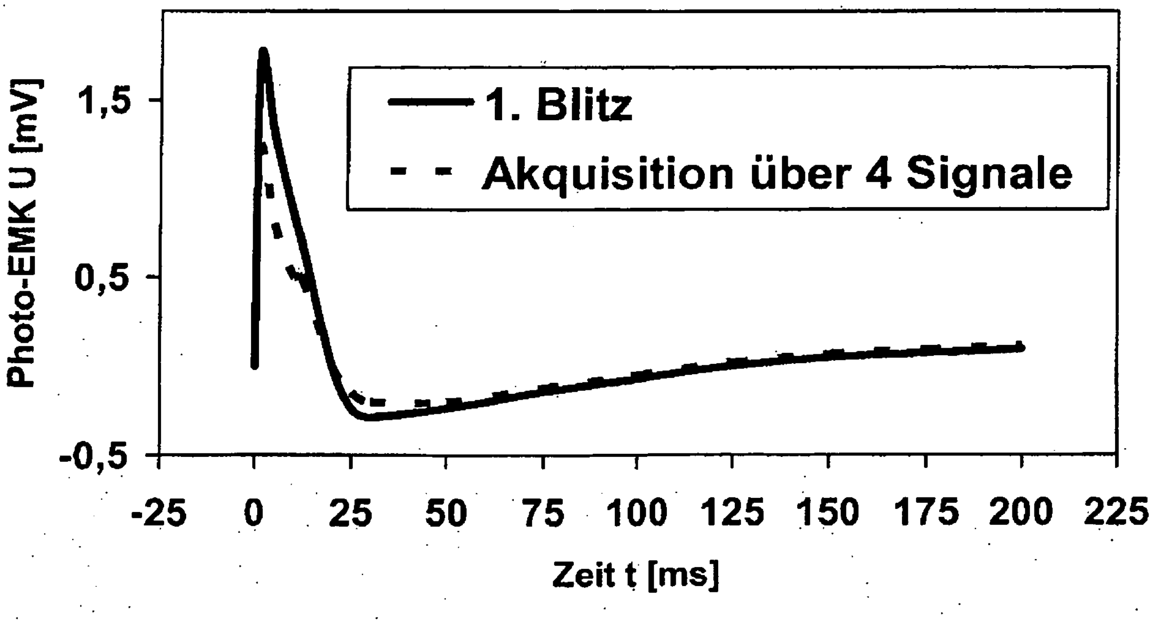

1,5
0,5
-0,5
Photo-EMK U [mV]
1. Blitz
Akquisition über 4 Signale
-25
0
25
50
75
100
125
150
175
200
225
Zeit t [ms]


Figur 8

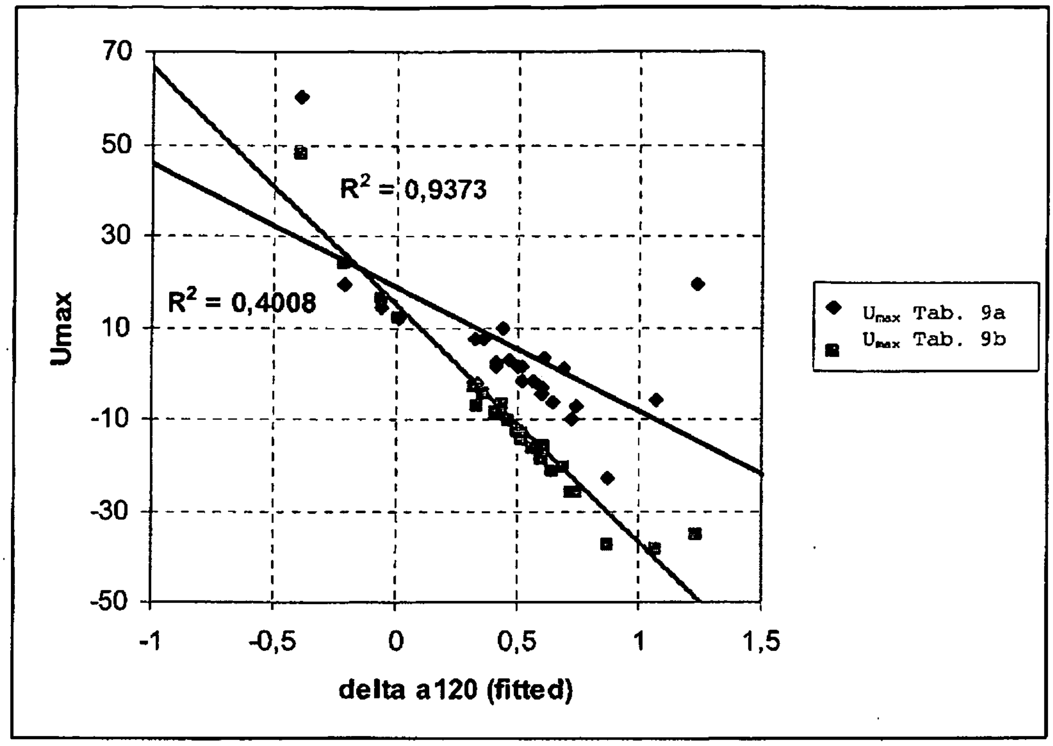
70
50
30
10
-10
-30
-50
Umax
$R^2$ = 0,9373
$R^2$ = 0,4008
-1
-0,5
0
0,5
1
1,5
delta a120 (fitted)
$U_{max}$ Tab. 9a
$U_{max}$ Tab. 9b

Figur 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1694873
- EP 768336 A
- EP 736569 A
- WO 02072684 A
- DE 10301675
- DE 1954273
- DE 102004037369


### In der Beschreibung aufgeführte Nicht-Patentliteratur


- **M. SCHILLER et al.** *Journal of Photochemistry and Photobiology A: Chemistry,* 2002, vol. 149, 227-236
- **G. ISRAEL et al.** *J. Inform. Rec.,* 1997, vol. 23, 559-584